# EUROPÄISCHE PATENTSCHRIFT

(11) **EP 2 483 354 B1**
(45) Veröffentlichungstag und Bekanntmachung des Hinweises auf die Patenterteilung: **28.08.2013**
(21) Anmeldenummer: 10757607.6
(22) Anmeldetag: 27.09.2010
(51) Int. Cl.: C08L 83/02, B01J 20/28, C07F 7/00, C08J 3/20, B01D 69/14, B01D 67/00, B01D 61/36

(54) **VERFAHREN ZUR TRENNUNG VON STOFFGEMISCHEN MITTELS MEHRPHASIGER POLYMERFILME**
METHOD FOR SEPARATING SUBSTANCE MIXTURES BY MEANS OF MULTIPHASE POLYMER FILMS
PROCÉDÉ DE SÉPARATION DE MÉLANGES DE MATIÈRES À L'AIDE DE FILMS POLYMÉRIQUES POLYPHASÉS

(30) Priorität: 01.10.2009 EP 09171969
(43) Veröffentlichungstag der Anmeldung: 08.08.2012
(73) Patentinhaber: BASF SE, 67056 Ludwigshafen (DE)
(72) Erfinder: LANGE, Arno, 67098 Bad Dürkheim (DE); HÄHNLE, Hans-Joachim, 67435 Neustadt (DE); SPANGE, Stefan, 07768 Orlamünde (DE); STAUDT, Claudia, 40219 Düsseldorf (DE); BISKUPSKI, Michael, 47809 Krefeld (DE)
(86) Internationale Anmeldenummer: PCT/EP2010/064254
(87) Internationale Veröffentlichungsnummer: WO 2011/039139

(56) Entgegenhaltungen:
- WO-A1-03/072232
- DE-A1-102005 042 138
- GRUND S ET AL: "Zwillingspolymerisation: ein Weg zur Synthese von Nanokompositen", ANGEWANDTE CHEMIE, WILEY - V C H VERLAG GMBH & CO. KGAA, WEINHEIM, DE LNKD- DOI:10.1002/ANGE.200504327, Bd. 119, 1. Januar 2007 (2007-01-01), Seiten 636-640, XP002517483, ISSN: 0044-8249 in der Anmeldung erwähnt

## Beschreibung

Die vorliegende Erfindung betrifft ein Verfahren zur Trennung von Stoffgemischen mittels eines nicht-porösen Polymerfilms, der
(a) wenigstens eine anorganische oder metallorganische Phase und
(b) wenigstens eine organische Polymerphase
aufweist, wobei der Polymerfilm durch Polymerisation wenigstens eines Monomers erhältlich ist, das wenigstens ein erstes polymerisierbares Monomersegment A1 enthaltend wenigstens ein Metall oder Halbmetall M und wenigstens ein zweites polymerisierbares organisches Monomersegment A2 aufweist, das über eine kovalente chemische Bindung mit dem polymerisierbaren Monomersegment A1 verbunden ist, unter Polymerisationsbedingungen, unter denen sowohl das polymerisierbare Monomersegment A1 als auch das polymerisierbare organische Monomersegment A2 unter Bruch der kovalenten chemischen Bindung zwischen A1 und A2 polymerisieren.

Die vorliegende Erfindung betrifft außerdem die Verwendung der vorgenannten Polymerfilme zur Permeation, Gastrennung oder Pervaporation.

Folien aus Kompositmaterialen sind an sich bekannt. So offenbart die nicht veröffentlichte Anmeldung EP 09164339.5 die Herstellung von porösen Folienmaterialen ausgehend von Zwillingspolymerisaten. Die erhaltenen porösen Kompositmaterialien finden als Separatoren in elektrochemischen Zellen Verwendung.

Hybride Polymerfilme als Membrane zur Trennung von Gasgemischen oder zur Pervaporation sind beispielsweise aus der WO 03/072232 bekannt. Nachteilig an diesen Membranen ist, dass zunächst ein organisch polymerer Träger hergestellt wird, der dann mit einem anorganischen Füllstoff versehen wird. Dieses Verfahren ist aufwendig und birgt die Gefahr von unerwünschten Inhomogenitäten. Dem Verfahren inhärent ist, dass mindestens eine Phase, im Allgemeinen die anorganische, nicht kontinuierlich ist und die Domänenstrukturen meist weit über 50 nm liegen.

Der vorliegenden Erfindung liegt somit die Aufgabe zugrunde, ein Verfahren zur Trennung von Stoffgemischen zur Verfügung zu stellen, welches bei der Stofftrennung mittels Permeation gute Trenneigenschaften, insbesondere eine hohe Selektivität und eine gute Trennleistung bietet. Das Verfahren sollte für die Gastrennung und für die Pervaporation einsetzbar sein. Gegenüber bekannten Polymerfilmen beziehungsweise Membrane sollten das Verfahren verbesserte Trenneigenschaften, gute mechanische Eigenschaften wie eine hohe Festigkeit und/oder Elastizität, gute Langzeiteigenschaften, eine breite Verwendbarkeit in verschiedenen Trennverfahren und insbesondere eine verbesserte Selektivität bei der Gastrennung und/oder Pervaporation aufweisen.

Diese und weitere Aufgaben werden durch das erfindungsgemäße Verfahren gelöst.

Dementsprechend betrifft die vorliegende Erfindung ein Verfahren zur Trennung von Stoffgemischen mittels eines nicht-porösen Polymerfilms, der
(a) wenigstens eine anorganische oder metallorganische Phase und
(b) wenigstens eine organische Polymerphase
aufweist, wobei der Polymerfilm durch Polymerisation wenigstens eines Monomers erhältlich ist, das wenigstens ein erstes polymerisierbares Monomersegment A1 enthaltend wenigstens ein Metall oder Halbmetall M und wenigstens ein zweites polymerisierbares organisches Monomersegment A2 aufweist, das über eine kovalente chemische Bindung mit dem polymerisierbaren Monomersegment A1 verbunden ist, unter Polymerisationsbedingungen, unter denen sowohl das polymerisierbare Monomersegment A1 als auch das polymerisierbare organische Monomersegment A2 unter Bruch der kovalenten chemischen Bindung zwischen A1 und A2 polymerisieren.

Bevorzugte Ausführungsformen werden im Folgenden und in den Ansprüchen beschrieben. Kombinationen bevorzugter Ausführungsformen verlassen den Rahmen der vorliegenden Erfindung nicht.

Unter nicht-porösem Polymerfilm ist ein Polymerfilm zu verstehen, welcher eine Porösität (Volumenanteil der Poren am Gesamtvolumen) von weniger als 0,10, insbesondere weniger als 0,05, besonders bevorzugt weniger als 0,02, ganz besonders bevorzugt weniger als 0,005, aufweist. Die Porosität wird im Rahmen der vorliegenden Erfindung durch Quecksilber-Intrusionsmessung nach DIN 66133 bestimmt.

Demzufolge ist ein nicht-poröser Polymerfilm ein im Wesentlichen porenfreier Polymerfilm, der höchstens Defekte aufweisen kann, welche eine geringfügige und vernachlässigbare Porosität erzeugen. Keinesfalls weisen die erfindungsgemäß verwendeten Polymerfilme eine sogenannte offenzellige Porosität auf (miteinander verbundene Poren).

Ein solcher nicht-poröser Polymerfilm ist strikt von einem porösen Polymerfilm zu unterscheiden, wie er beispielsweise aus der nicht-veröffentlichten Anmeldung EP 09164339.5 bekannt ist. In letztgenannter Anmeldung wird ein nicht-poröser Polymerfilm durch spezifische Behandlung in einen porösen Polymerfilm umgewandelt, indem die organische Polymerphase A2 zumindest teilweise entfernt und in Poren umgewandelt wird.

Ein Polymerfilm ist eine selbsttragende, räumlich in zwei Dimensionen ausgedehnte Struktur bestehend aus einem polymeren Material mit einer Dicke von höchstens 1000 Mikrometern, insbesondere höchstens 500 Mikrometern, bevorzugt höchstens 300 Mikrometern. Die Dicke von selbsttragenden Polymerfilmen beträgt mindestens 10 Mikrometer, insbesondere mindestens 50 Mikrometer. Unter polymerem Material ist anorganisches, insbesondere oxidisches, organisches oder gemischt anorganisch/organisches Material zu verstehen (Kompositmaterial).

Unter Stoffgemischen sollen Gemische aus mindestens zwei gasförmigen Stoffen sowie Gemische aus mindestens zwei flüssigen Stoffen verstanden werden.

Die Polymerfilme der vorliegenden Erfindung werden vorteilhaft als Membrane oder in Membranen verwendet. Der Polymerfilm kann selbst eine Membran sein (Verwendung als Membran) oder Teil einer mehrschichtigen Membran sein (Verwendung in Membranen). Entsprechende mehrschichtige Membranaufbauten sind dem Fachmann bekannt. Insbesondere wählt der Fachmann geeignete Membranaufbauten in Abhängigkeit von der Art der durchzuführenden Trennung. Die vorliegenden Polymerfilme werden als selektiv-permeable Membranschicht (bzw. Membran) verwendet, d .h. zur Stofftrennung mittels Permeation, wobei die Polymerfilme gegenüber den zu trennenden Stoffen unterschiedlich permeabel sind.

Zwillingspolymerisation ist die Polymerisation wenigstens eines Monomers, das wenigstens ein erstes polymerisierbares Monomersegment A1 und wenigstens ein zweites polymerisierbares Monomersegment A2 aufweist, das über eine kovalente chemische Bindung mit dem polymerisierbaren Monomersegment A1 verbunden ist, unter Polymerisationsbedingungen, unter denen sowohl das polymerisierbare Monomersegment A1 als auch das polymerisierbare organische Monomersegment A2 unter Bruch der kovalenten chemischen Bindung zwischen A1 und A2 polymerisieren.

Der Begriff Monomersegment kennzeichnet einen oder mehrere Bereiche des Monomers. Ein Monomersegment umfasst insbesondere ein oder mehrere funktionelle Gruppen des Monomers, d. h. der Begriff Segment bzw. Bereich ist funktional zu verstehen und kennzeichnet nicht unbedingt einen im Monomer räumlich abgegrenzten Bereich.

Die im erfindungsgemäßen Verfahren zur Trennung von Stoffgemischen verwendeten Polymerfilme sind durch Zwillingspolymerisation erhältlich. Die Polymerisation führt im Rahmen des erfindungsgemäßen Verfahrens zu einem Kompositmaterial in Form eines Polymerfilmes, wobei das Kompositmaterial wenigstens eine anorganische oder metallorganische Phase A1* und wenigstens eine organische Polymerphase A2* aufweist.

Der Begriff " anorganische Phase" bezieht sich auf eine anorganische, insbesondere oxidische Phase, wobei der Begriff" metallorganische Phase" die Anwesenheit von organischen Gruppen kennzeichnet, die mit einem Metall oder Halbmetall verknüpft sind.

Die Polymerisationsbedingungen einer Zwillingspolymerisation sind so gewählt, dass bei der Polymerisation des Monomers die Monomersegmente A1 und A2 synchron polymerisieren, wobei das erste Monomersegment A1 ein oxidisches polymeres Material bildet, welches das Metall oder Halbmetall M enthält, und gleichzeitig das zweite Monomersegment ein organisches Polymer (Polymerphase A2*) bildet, welches aus den zweiten Monomersegmenten aufgebaut ist. Der Begriff "synchron" bedeutet nicht zwingend, dass die Polymerisation der ersten und der zweiten Monomersegment mit gleicher Geschwindigkeit ablaufen. Vielmehr versteht man unter "synchron", dass die Polymerisationen der ersten und der zweiten Monomersegmente kinetisch gekoppelt sind und durch die gleichen Polymerisationsbedingungen, in der Regel kationische Polymerisationsbedingungen, ausgelöst werden, d. h. zeitgleich ablaufen.

Unter den Polymerisationsbedingungen tritt eine teilweise oder vollständige Phasenseparation in eine erste anorganische oder metallorganische Phase (d. h. die (Halb)Metalloxidphase A1*), und eine zweite Phase, welche von dem aus den zweiten Monomersegmenten aufgebauten organischen Polymer (zweites polymeres Material, Polymerphase A2*) gebildet wird, auf. Auf diese Weise erhält man ein Kompositmaterial aus der (Halb)Metalloxidphase A1* und der Polymerphase A2*.

Aufgrund der synchronen Polymerisation kommt es zu einer Ausbildung sehr kleiner Phasenbereiche aus der anorganischen oder metallorganischen Phase A1* und der Polymerphase A2*, deren Abmessungen in der Regel im Bereich weniger Nanometer liegen, wobei die Phasendomänen der Phase A1* und der Polymerphase A2* vorzugsweise eine co-kontinuierliche Anordnung aufweisen. Die Abstände zwischen benachbarten Phasengrenzen, bzw. die Abstände zwischen den Domänen benachbarter identischer Phasen sind sehr gering und liegen im Mittel bei maximal 10 nm, häufig bei maximal 5 nm, insbesondere bei maximal 2 nm und speziell maximal 1 nm. Eine makroskopisch sichtbare Trennung in diskontinuierliche Domänen der jeweiligen Phase tritt nicht auf.

Die in der anorganischen oder metallorganischen Phase A1* enthaltenen Kohlenwasserstoffgruppen, welche an die (Halb)Metallatome M gebunden sind, resultieren daraus, dass man bei der Polymerisation zumindest teilweise solche Zwillingsmonomere, wie zuvor erläutert, einsetzt, die wenigstens eine Kohlenwasserstoffgruppe tragen, welche über ein Kohlenstoffatom an das (Halb)Metallatom M des Zwillingsmonomers gebunden sind.

Die Zwillingspolymerisation ist grundsätzlich bekannt und wurde erstmalig von S. Spange et al., Angew. Chem. Int. Ed., 46 (2007) 628-632 anhand der kationischen Polymerisation von Tetrafurfuryloxysilan zu Polyfurfurylalkohol und Siliziumdioxid sowie anhand der kationischen Polymerisation von Difurfuryloxydimethylsilan zu Polyfurfurylalkohol und Polydimethylsiloxan beschrieben. Außerdem wird in WO 2009/083083 eine Zwillingspolymerisation von gegebenenfalls substituiertem 2,2'-Spiro[4H-1,3,2-benzodioxasilin] (im Folgenden als SPISI bezeichnet) beschrieben. Auf die diesbezügliche Offenbarung in WO 2009/083083 wird verwiesen.

Für das erfindungsgemäße Verfahren bevorzugte Monomere sind solche, worin das Monomersegment A1 mindestens ein Metall oder Halbmetall M enthält, das unter den Metallen und Halbmetallen der 3. Hauptgruppe (Gruppe 3 nach IUPAC), insbesondere B oder Al, Metallen und Halbmetallen der 4. Hauptgruppe des Periodensystems (Gruppe 14 nach IUPAC), insbesondere Si, Ge, Sn oder Pb, Halbmetallen der 5. Hauptgruppe des Periodensystems (Gruppe 15 nach IUPAC), insbesondere As, Sb und Bi, Metallen der 4. Nebengruppe des Periodensystems, insbesondere Ti, Zr und Hf, und Metallen der 5. Nebengruppe des Periodensystems, insbesondere V, ausgewählt ist. Vorzugsweise wird das Metall oder Halbmetall M des Monomersegmentes A1 ausgewählt aus B, Al, Si, Ti, Zr, Hf, Ge, Sn, Pb, V, As, Sb, Bi und deren Mischungen.

Für das erfindungsgemäße Verfahren besonders bevorzugt sind insbesondere solche Monomere, worin das Monomersegment A1 ein Metall oder Halbmetall M enthält, das unter den Metallen und Halbmetallen der 4. Hauptgruppe des Periodensystems, insbesondere Si, Ge, Sn oder Pb und Metallen der 4. Nebengruppe des Periodensystems, insbesondere Ti, Zr und Hf, und Bor ausgewählt ist.

Für das erfindungsgemäße Verfahren besonders bevorzugte Monomere sind solche, worin das Monomersegment A1 ein Metall oder Halbmetall enthält, das aus Si, B und Ti ausgewählt ist.

Im Rahmen des erfindungsgemäßen Verfahrens ganz besonders bevorzugt sind solche Monomere, worin zumindest in einem Teil oder der Gesamtmenge der Monomere das Monomersegment A1 im Wesentlichen ausschließlich Silizium enthält. In einer ganz besonders bevorzugten Ausführungsform sind wenigstens 90 mol-% und insbesondere die Gesamtmenge der in den Zwillingsmonomeren enthaltenen Metalle bzw. Halbmetalle M Silizium.

In einer ebenfalls besonders bevorzugten Ausführungsform sind wenigstens 90 mol-% und insbesondere die Gesamtmenge der in den Zwillingsmonomeren enthaltenen Metalle bzw. Halbmetalle M unter Kombinationen von Silizium mit wenigstens einem weiteren (Halb)Metallatom, insbesondere Bor oder Titan, ausgewählt. Hierbei liegt das Molverhältnis von Silizium zu dem weiteren (Halb)Metallatom vorzugsweise im Bereich von 10:1 bis 1:10 und speziell im Bereich von 1:5 bis 5:1.

Vorteilhafterweise sind die gemäß der vorliegenden Erfindung verwendeten Polymerfilme erhältlich durch Polymerisation eines ersten Monomers M1 und mindestens eines weiteren Monomers M2, d. h. bei der Zwillingspolymerisation handelt es sich vorzugsweise um eine Zwillings-Copolymerisation. Die Zwillings-Copolymerisation ist in der internationalen Anmeldung PCT/EP2010/054404 beschrieben.

Im Rahmen der bevorzugten Copolymerisation umfassen die zu polymerisierenden Monomere ein erstes Monomer M1 und wenigstens ein zweites Monomer M2, das sich zumindest in einem der Monomersegmente A1 oder A2 von dem Monomer M1 unterscheidet (Ausführungsform 1), oder wobei die zu polymerisierenden Monomere neben dem wenigstens einen zu polymerisierenden Monomer M1 wenigstens ein weiteres, davon verschiedenes Monomer ohne Monomersegment A1 umfassen, das mit dem Monomersegment A2 copolymerisierbar ist (Ausführungsform 2). Geeignete Monomere werden nachstehend erläutert.

Gemäß der besonders bevorzugten Ausführungsform 1 umfassen die zu polymerisierenden Monomere ein erstes Monomer M1 und wenigstens ein zweites Monomer M2, das sich zumindest in einem der Monomersegmente A1 oder A2 von dem Monomer M1 unterscheidet.

Gemäß einer bevorzugten Ausgestaltung der Ausführungsform 1 unterscheiden sich die Monomere M1 und M2 in der Art des Monomersegments A1.

Ein solcher Unterschied kann die Art des Metalls bzw. Halbmetalls in dem Monomersegment A1 sein: Beispielsweise kann man Zwillingsmonomere miteinander copolymerisieren, in denen das eine Monomer (Monomer M1) Silizium als Halbmetall enthält und das zweite Monomer M2 ein Metall oder Halbmetall enthält, das unter einem von Silizium verschiedenen Metall oder Halbmetall ausgewählt ist, z.B. Bor oder ein Metall der 4. Nebengruppe des Periodensystem wie Ti, Zr oder Hf, insbesondere Ti.

Ein solcher Unterschied kann auch die Art des bzw. der Liganden des Metalls bzw. Halbmetalls M in den Zwillingsmonomeren sein, die an der Polymerisation der organischen Phase nicht involviert sind. Weist beispielsweise das Metall oder Halbmetall M, speziell Silizium, in dem Monomersegment A1 des Monomers M2 unter Polymerisationsbedingungen inerte anorganische oder organische Liganden auf, die unter Polymerisationsbedingungen nicht abgespalten werden, z.B. über Kohlenstoff oder Stickstoff gebundene inerte Kohlenwasserstoff-Reste wie Alkyl, Cycloalkyl oder ggf. substituiertes Phenyl, dann werden diese inerten Reste Bestandteil der anorganischen bzw. metallorganischen Phase. Bei der Copolymerisation eines solchen Monomers M2 mit einem Monomer M1, das keine solchen Liganden am (Halb)metallatom des Monomersegments A1 trägt, sondern vielmehr ausschließlich Liganden, welche die polymerisierbare Einheit A2 bilden und die vorzugsweise über Sauerstoff gebunden sind, entsteht in der Regel eine anorganische Mischphase oder ein Gemisch aus zwei anorganischen bzw. metallorganischen Phasen mit typischerweise oxidischen (oder nitridischen oder sulfidischen) Bestandteilen, die aus dem Monomer M1 resultieren, sowie oxidische, sulfidische, nitridische oder metallorganische Bestandteile, die aus dem Monomer M2 resultieren.

Steht beispielsweise das (Halb)metallatom im Monomer M1 für Silizium, Bor oder Titan, das ausschließlich über Sauerstoff gebundene Gruppen A2 aufweist und das (Halb)metallatom im Monomer M2 für Silizium, das neben den Gruppen A2, die vorzugsweise über Sauerstoff gebunden sind, auch inerte über Kohlenstoff gebundene Liganden trägt, dann bilden sich bei der Polymerisation neben Siliziumdioxid oder Titandioxid auch Polysiloxane oder ein mit Siloxan-Einheiten modifiziertes Siliziumdioxid bzw. Titandioxid.

Gemäß einer weiteren besonders bevorzugten Ausgestaltung der Ausführungsform 1 unterscheiden sich die Monomere M1 und M2 in der Art des Monomersegments A2. Auf diese Weise erhält man Kompositmaterialien, die bezüglich der organischen Polymerphase modifiziert sind. Weisen beispielsweise die Monomere M1 und M2 jeweils Monomersegmente A21 bzw. A22 auf, die miteinander copolymerisierbar sind, dann bildet sich bei der Zwillingspolymerisation ein Copolymer, das aus einer organischen Polymerphase A21*/A22* aufgebaut ist. Sind die Monomersegmente A21 und A22 nicht miteinander copolymerisierbar, bildet sich bei der Zwillingscopolymerisation in der organischen Polymerphase ein Blend aus zwei voneinander verschiedenen Polymeren aus, die miteinander innigst vermischt sind, wobei das eine Polymer im Wesentlichen aus der organischen Polymerphase A21* und das andere Polymer im wesentlichen aus der organischen Polymerphase A22* aufgebaut ist.

In der Ausführungsform 1 liegt das Molverhältnis von Monomer M1 zu dem wenigstens einen weiteren Monomer M2 in der Regel im Bereich von 5 : 95 bis 95 : 5, vorzugsweise im Bereich von 10:90 bis 90:10, insbesondere im Bereich von 15:85 bis 85:15 und speziell im Bereich von 20:80 bis 80:20.

Gemäß der erfindungsgemäßen Ausführungsform 2 umfassen die zu polymerisierenden Monomere neben dem wenigstens einen Monomer M1 wenigstens ein weiteres, von den Monomeren M1 verschiedenes Monomer M' (Comonomer M'), d.h. ein konventionelles Monomer ohne Monomersegment A1, das mit dem Monomersegment A2 copolymerisierbar ist. Auf diese Weise bildet sich bei der Zwillingspolymerisation ein Copolymer, das aus der organischen Polymerphase A2* aufgebaut ist, welche das Comonomer M' in umgesetzter Form umfasst. Ein solches Comonomer kann beispielsweise Formaldehyd oder ein Formaldehyd-Precursor wie Paraformaldehyd oder Trioxan sein, insbesondere wenn das Monomersegment A2 eine gegebenenfalls substituierte Benzyl-, Furfuryl- oder Thienylmethyl-Einheit ist.

Nachstehend werden bevorzugte Monomere M1 bzw. M2 näher erläutert.

Bevorzugte Monomere lassen sich durch die allgemeine Formel 1 beschreiben: 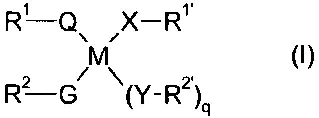 worin
- M: für eine Metall oder Halbmetall steht, vorzugsweise ein Metall oder Halbmetall der 3. oder 4. Hauptgruppe oder der 4 oder 5. Nebengruppe des Periodenssystems, insbesondere B, Al, Si, Ti, Zr, Hf, Ge, Sn, Pb, V, As, Sb oder Bi, besonders bevorzugt Si, Ti, Zr oder Sn, ganz besonders bevorzugt Si oder Ti und speziell Si;
- R¹, R²: gleich oder verschieden sein können und für einen Rest Ar-C(R^{a},R^{b})- stehen, worin Ar für einen aromatischen oder heteroaromatischen Ring steht, der gegebenenfalls 1 oder 2 Substituenten aufweist, die unter Halogen, CN, C₁-C6-Alkyl, C₁-C₆-Alkoxy und Phenyl ausgewählt sind und R^{a}, R^{b} unabhängig voneinander für Wasserstoff oder Methyl stehen oder gemeinsam ein Sauerstoffatom bedeuten und insbesondere beide für Wasserstoff stehen,
oder die Reste R¹Q und R²G für einen Rest der Formel A 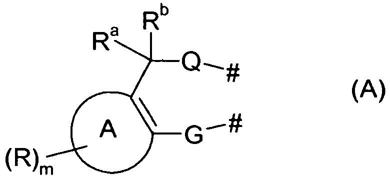 stehen, worinAfür einen an die Doppelbindung kondensierten aromatischen oder heteroaromatischen Ring steht, m für 0, 1 oder 2 steht, R gleich oder verschieden sein kann und unter Halogen, CN, C₁-C6-Alkyl, C₁-C₆-Alkoxy und Phenyl ausgewählt ist und R^{a}, R^{b} die zuvor genannten Bedeutungen aufweisen;
- G: für O, S oder NH steht und insbesondere O bedeutet;
- Q: für O, S oder NH steht und insbesondere O bedeutet;
- q: entsprechend der Wertigkeit von M für 0, 1 oder 2 und insbesondere für 1 steht,
- X, Y: gleich oder verschieden sein können und für O, S, NH oder eine chemische Bindung stehen und insbesondere Sauerstoff oder eine chemische Bindung bedeuten;
- R^{1'}, R^{2'}: gleich oder verschieden sein können und für C₁-C₆-Alkyl, C₃-C₆-Cycloalkyl, Aryl oder einen Rest Ar'-C(R^{a'},R^{b'})- stehen, worin Ar' die für Ar angegebenen Bedeutungen hat und R^{a'}, R^{b'} die für R^{a}, R^{b} angegebenen Bedeutungen aufweisen und insbesondere für Wasserstoff stehen, oder R^{1'}, R^{2'} gemeinsam mit X und Y für einen Rest der Formel A, wie zuvor definiert, stehen, und
- #: Platzhalter für die entsprechenden Strukturelemente gemäß Formel (I) sind.

In den Monomeren der Formel I bilden die den Resten R¹Q und R²G entsprechenden Molekülteile ein polymerisierbares Monomersegment A2. Wenn X und Y von einer chemischen Bindung verschieden sind und R^{1'}X und R^{2'} nicht für inerte Reste wie C₁-C₆-Alkyl, C₃-C₆-Cycloalkyl oder Aryl stehen, bilden die Reste R^{1'}X und R^{2'}Y ebenfalls ein polymerisierbares Monomersegment A2. Hingegen bildet das Metallatom M, gegebenenfalls zusammen mit den Gruppen Q und Y, Hauptbestandteil des Monomersegments A1.

Unter einem aromatischen Rest versteht man im Sinne der Erfindung einen carbocyclischen aromatischen Kohlenwasserstoff-Rest wie Phenyl oder Naphthyl.

Unter einem heteroaromatischen Rest versteht man im Sinne der Erfindung einen heterocyclischen aromatischen Rest, der in der Regel 5 oder 6 Ringglieder aufweist, wobei eines der Ringglieder ein Heteroatom ist, das unter Stickstoff, Sauerstoff und Schwefel ausgewählt ist, und gegebenenfalls 1 oder 2 weitere Ringlieder ein Stickstoffatom sein können und die verbleibenden Ringglieder Kohlenstoff sind. Beispiele für heteroaromatische Reste sind Furyl, Thienyl, Pyrrolyl, Pyrazolyl, Imidazolyl, Oxazolyl, Isoxazolyl, Pyridyl oder Thiazolyl.

Unter einem kondensierten aromatischen Rest bzw. Ring versteht man im Sinne der Erfindung einen carbocyclischen aromatischen, zweiwertigen Kohlenwasserstoff-Rest wie o-Phenylen (Benzo) oder 1,2-Naphthylen (Naphtho).

Unter einem kondensierten heteroaromatischen Rest bzw. Ring versteht man im Sinne der Erfindung einen heterocyclischen aromatischen Rest wie zuvor definiert, worin zwei benachbarte C-Atome die in Formel A bzw. in den Formeln II und III dargestellte Doppelbindung bilden.

Gemäß einer ersten bevorzugten Ausführungsform der Monomere der Formel I stehen die Gruppen R¹Q und R²G gemeinsam für einen Rest der Formel A wie zuvor definiert, insbesondere für einen Rest der Formel Aa: 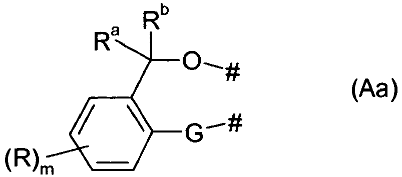 worin #, m, R, R^{a} und R^{b} die zuvor genannten Bedeutungen aufweisen. In den Formeln A und Aa steht die Variable m insbesondere für 0. Sofern m für 1 oder 2 steht, bedeutet R insbesondere eine Methyl- oder Methoxygruppe. In den Formeln A und Aa stehen R^{a} und R^{b} insbesondere für Wasserstoff. In Formel A steht Q insbesondere für Sauerstoff. In den Formeln A und Aa steht G insbesondere für Sauerstoff oder NH, insbesondere für Sauerstoff.

Unter den Monomeren der ersten Ausführungsform sind insbesondere solche Monomere der Formel I besonders bevorzugt, worin q = 1 ist und worin die Gruppen X-R^{1'} und Y-R^{2'} gemeinsam für einen Rest der Formel A, insbesondere für einen Rest der Formel Aa stehen. Derartige Monomere lassen sich durch die folgenden Formeln II bzw. IIa beschreiben:

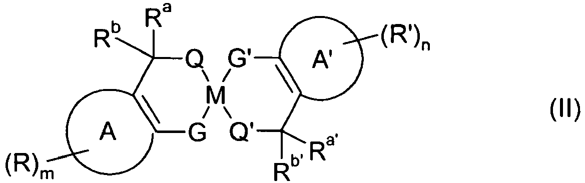

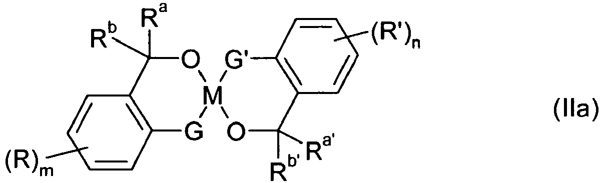

In Formel II haben die Variablen die folgenden Bedeutungen:
- M: steht für eine Metall oder Halbmetall, vorzugsweise ein Metall oder Halbmetall der 3. oder 4. Hauptgruppe oder der 4 oder 5. Nebengruppe des Periodenssystems, insbesondere B, Al, Si, Ti, Zr, Hf, Ge, Sn, Pb, V, As, Sb oder Bi, besonders bevorzugt Si, Ti, Zr oder Sn, speziell Si;
- A, A': stehen unabhängig voneinander für einen an die Doppelbindung kondensierten aromatischen oder heteroaromatischen Ring;
- m, n: stehen unabhängig voneinander für 0, 1 oder 2, insbesondere für 0;
- G, G': stehen unabhängig voneinander für O, S oder NH, insbesondere O oder NH und speziell für O;
- Q, Q': stehen unabhängig voneinander für O, S oder NH, insbesondere für O;
- R, R': sind unabhängig voneinander unter Halogen, CN, C₁-C₆-Alkyl, C₁-C₆-Alkoxy und Phenyl ausgewählt und stehen insbesondere für Methyl oder Methoxy;
- R^{a}, R^{b}, R^{a'}, R^{b'}: sind unabhängig voneinander ausgewählt unter Wasserstoff und Methyl oder R^{a} und R^{b} und/oder R^{a'} und R^{b'} stehen jeweils gemeinsam für ein Sauerstoffatom; insbesondere stehen R^{a}, R^{b}, R^{a'}, R^{b'} jeweils für Wasserstoff.

In Formel IIa haben die Variablen die folgenden Bedeutungen:
- M: steht für eine Metall oder Halbmetall, vorzugsweise ein Metall oder Halbmetall der 3. oder 4. Hauptgruppe oder der 4 oder 5. Nebengruppe des Periodenssystems, insbesondere B, Al, Si, Ti, Zr, Hf, Ge, Sn, Pb, V, As, Sb oder Bi, besonders bevorzugt Si, Ti, Zr oder Sn, speziell Si;
- m, n: stehen unabhängig voneinander für 0, 1 oder 2, insbesondere für 0;
- G, G': stehen unabhängig voneinander für O, S oder NH, insbesondere O oder NH und speziell für O;
- R, R': sind unabhängig voneinander unter Halogen, CN, C₁-C6-Alkyl, C₁-C₆-Alkoxy und Phenyl ausgewählt und stehen insbesondere für Methyl oder Methoxy;
- R^{a}, R^{b}, R^{a'}, R^{b'}: sind unabhängig voneinander ausgewählt unter Wasserstoff und Methyl oder R^{a} und R^{b} und/oder R^{a'} und R^{b'} stehen jeweils gemeinsam für ein Sauerstoffatom; insbesondere stehen R^{a}, R^{b}, R^{a'}, R^{b'} jeweils für Wasserstoff.

Eine ganz besonders bevorzugte Ausführungsform ist als Monomer der Formel II bzw. IIa 2,2'-Spirobis[4H-1,3,2-benzodioxasilin] (Verbindung der Formel IIa mit M = Si, m = n = 0, G = O, R^{a} = R^{b} = R^{a'} = R^{b'} = Wasserstoff). Derartige Monomere sind aus der WO 2009/083083 bekannt oder können nach den dort beschriebenen Methoden hergestellt werden.

In den Monomeren II und IIa bildet die Einheit MQQ' bzw. MOO die polymerisierbare Einheit A1, wohingegen die verbleibenden Teile des Monomers II bzw. IIa, d.h. die Gruppen der Formel A bzw. Aa, abzüglich der Atome Q bzw. Q' (bzw. abzüglich des Sauerstoffatoms in Aa) die polymerisierbaren Einheiten A2 bilden.

Gemäß einer bevorzugten Ausführungsform 1a copolymerisiert man ein Gemisch zweier oder mehrerer Monomere M1 und M2, wobei das Monomer M1 ein Monomer der Formel II oder IIa ist und das weitere Monomer M2 ebenfalls unter den Monomeren der Formeln II oder IIa ausgewählt ist, wobei sich das Monomer M1 von dem Monomer M2 in der Art der polymerisierbaren Einheit A1, also insbesondere dem (Halb)Metallatom M unterscheidet. Insbesondere steht dann das (Halb)Metallatom M im Monomer M1 für Silizium und im Monomer M2 für ein von Silizium verschiedenes (Halb)Metallatom, insbesondere für Ti, Zr, Hf oder Sn und speziell für Ti.

Gemäß einer weiteren bevorzugten Ausführungsform 1 b copolymerisiert man ein Gemisch zweier oder mehrerer Monomere M1 und M2, wobei das Monomer M1 ein Monomer der Formel II oder IIa ist und das weitere Monomer M2 unter den Monomeren der im Folgenden definierten Formeln III oder IIIa ausgewählt ist. Auch hier unterscheidet sich das Monomer M1 von dem Monomer M2 in der Art der polymerisierbaren Einheit A1, nämlich dadurch, dass das Monomer M2 Liganden aufweist, die unter Polymerisationsbedingungen am Metall verbleiben können. Insbesondere steht dann das (Halb)Metallatom M im Monomer M1 für Silizium oder Titan und im Monomer M2 für Silizium.

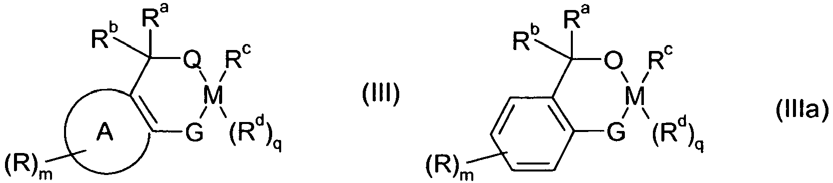

In Formel III haben die Variablen die folgenden Bedeutungen:
- M: steht für eine Metall oder Halbmetall, vorzugsweise ein Metall oder Halbmetall der 3. oder 4. Hauptgruppe oder der 4 oder 5. Nebengruppe des Periodenssystems, insbesondere B, Al, Si, Ti, Zr, Hf, Ge, Sn, Pb, V, As, Sb oder Bi, besonders bevorzugt Si, Ti, Zr oder Sn, speziell Si;
- A: steht für einen an die Doppelbindung kondensierten aromatischen oder heteroaromatischen Ring;
- m: steht für 0, 1 oder 2, insbesondere 0;
- G: steht für O, S oder NH, insbesondere O oder NH und speziell für O;
- Q: steht für O, S oder NH, insbesondere für O;
- R: ist unabhängig voneinander unter Halogen, CN, C₁-C₆-Alkyl, C₁-C₆-Alkoxy und Phenyl ausgewählt und steht insbesondere für Methyl oder Methoxy;
- R^{a}, R^{b}: sind unabhängig voneinander ausgewählt unter Wasserstoff und Methyl oder R^{a} und R^{b} gemeinsam für ein Sauerstoffatom stehen, und stehen insbesondere beide für Wasserstoff;
- R^{c}, R^{d}: sind gleich oder verschieden und unter C₁-C₆-Alkyl, C₃-C₆-Cycloalkyl und Aryl ausgewählt und stehen insbesondere für Methyl.

In Formel IIIa haben die Variablen die folgenden Bedeutungen:
- M: steht für eine Metall oder Halbmetall, vorzugsweise ein Metall oder Halbmetall der 3. oder 4. Hauptgruppe oder der 4 oder 5. Nebengruppe des Periodenssystems, insbesondere B, Al, Si, Ti, Zr, Hf, Ge, Sn, Pb, V, As, Sb oder Bi, besonders bevorzugt Si, Ti, Zr oder Sn, speziell Si;
- m: steht für 0, 1 oder 2, insbesondere 0;
- G: steht für O, S oder NH, insbesondere O oder NH und speziell für O;
- R: ist unabhängig voneinander unter Halogen, CN, C₁-C₆-Alkyl, C₁-C₆-Alkoxy und Phenyl ausgewählt und steht insbesondere für Methyl oder Methoxy;
- R^{a}, R^{b}: sind unabhängig voneinander ausgewählt unter Wasserstoff und Methyl oder R^{a} und R^{b} gemeinsam für ein Sauerstoffatom stehen, und stehen insbesondere beide für Wasserstoff;
- R^{c}, R^{d}: sind gleich oder verschieden und unter C₁-C₆-Alkyl, C₃-C₆-Cycloalkyl und Aryl ausgewählt und stehen insbesondere für Methyl.

In einer ganz besonders bevorzugten Ausführungsform werden als Monomere der Formel III bzw. IIIa 2,2-Dimethyl-4H-1,3,2-benzodioxasilin (Verbindung der Formel IIIa mit M = Si, q = 1, m = 0, G = O, R^{a} = R^{b} = Wasserstoff, R^{c} = R^{d} = Methyl), 2,2-Dimethyl-4H-1,3,2-benzooxazasilin, (Verbindung der Formel IIIa mit M = Si, q = 1, m = 0, G = NH, R^{a} = R^{b} = Wasserstoff, R^{c} = R^{d} = Methyl), 2,2-Dimethyl-4-oxo-1,3,2-benzodioxasilin (Verbindung der Formel IIIa mit M = Si, q = 1, m = 0, G = O, R^{a} + R^{b} = O, R^{c} = R^{d} = Methyl) oder 2,2-Dimethyl-4oxo-1,3,2-benzooxazasilin (Verbindung der Formel IIIa mit M = Si, q = 1, m = 0, G = NH, R^{a} + R^{b} = O, R^{c} = R^{d} = Methyl) verwendet. Derartige Monomere sind z.B. aus Wieber et al. Journal of Organometallic Chemistry; 1, (1963), 93, 94 bekannt.

Gemäß einer weiteren bevorzugten Ausführungsform 1c copolymerisiert man ein Gemisch zweier oder mehrerer Monomere M1 und M2, wobei das Monomer M1 ein Monomer der Formel II oder IIa ist und das weitere Monomer M2 unter den Monomeren der im Folgenden definierten Formel IV, V, Va, VI oder VIa ausgewählt ist. Hier unterscheidet sich das Monomer M1 von dem Monomer M2 in der Art der polymerisierbaren Einheit A2 und gegebenenfalls in der Art der polymerisierbaren Einheit A1, insbesondere dann, wenn die Monomere M2 ein (Halb)metallatom M aufweisen, das vom (Halb)metallatom M des Monomers M1 verschieden ist.

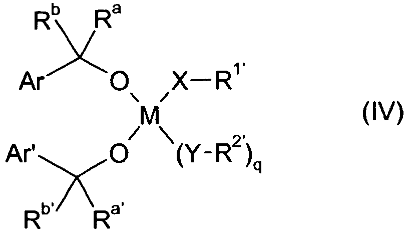

In Formel IV haben die Variablen die folgenden Bedeutungen:
- M: steht für eine Metall oder Halbmetall, vorzugsweise ein Metall oder Halbmetall der 3. oder 4. Hauptgruppe oder der 4 oder 5. Nebengruppe des Periodenssystems, insbesondere B, Al, Si, Ti, Zr, Hf, Ge, Sn, Pb, V, As, Sb oder Bi, besonders bevorzugt Si, Ti, Zr oder Sn, speziell Si;

- Ar, Ar': sind gleich oder verschieden und stehen für einen aromatischen oder heteroaromatischen Ring, insbesondere für 2-Furyl oder Phenyl, wobei der aromatische oder heteroaromatische Ring gegebenenfalls 1 oder 2 Substituenten aufweist, die unter Halogen, CN, C₁-C₆-Alkyl, C₁-C₆-Alkoxy und Phenyl ausgewählt sind;
- R^{a}, R^{b}, R^{a'}, R^{b'}: sind unabhängig voneinander ausgewählt unter Wasserstoff und Methyl oder R^{a} und R^{b} und/oder R^{a'} und R^{b'} stehen jeweils gemeinsam für ein Sauerstoffatom; insbesondere stehen R^{a}, R^{b}, R^{a'}, R^{b'} jeweils für Wasserstoff;
- q: steht entsprechend der Wertigkeit von M für 0, 1 oder 2 und speziell für 1;
- X, Y: sind gleich oder verschieden und stehen für O, S, NH oder eine chemische Bindung; und
- R^{1'}, R^{2'}: sind gleich oder verschieden und stehen für C₁-C₆-Alkyl, C₃-C₆-Cycloalkyl, Aryl oder für einen Rest Ar"-C(R^{a"},R^{b"})-, worin Ar" die für Ar bzw. R' angegebenen Bedeutungen hat und R^{a"}, R^{b"} die für R^{a}, R^{b} bzw. die für R^{a'}, R^{b'} angegebenen Bedeutungen aufweisen oder R^{1'}, R^{2'} stehen gemeinsam mit X und Y für einen Rest der Formel A, insbesondere einen Rest der Formel Aa, wie zuvor definiert.

Unter den Monomeren der Formel IV sind insbesondere solche Monomere bevorzugt, worin q = 0, 1 oder 2, insbesondere 1 ist und die Gruppen X-R^{1'} und Y-R^{2'} gleich oder verschieden sind und für eine Gruppe Ar"-C(R^{a"},R^{b"})O, und vorzugsweise für eine Gruppe Ar"-CH₂O (R^{a} = R^{b} = Wasserstoff) stehen, wobei Ar" die zuvor genannten Bedeutungen aufweist und insbesondere ausgewählt ist unter Furyl, Thienyl, Pyrrolyl und Phenyl, wobei die vier genannten Ringe unsubstituiert sind oder einen oder zwei Substituenten aufweisen, die unter Halogen, CN, C₁-C₆-Alkyl, C₁-C₆-Alkoxy und Phenyl ausgewählt sind. Derartige Monomere lassen sich durch die folgenden Formeln V bzw. Va beschreiben:

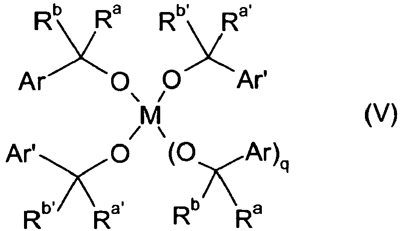

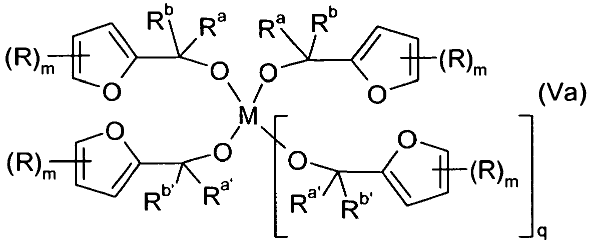

In den Formeln V und Va haben die Variablen die folgenden Bedeutungen:
- M: steht für eine Metall oder Halbmetall, vorzugsweise ein Metall oder Halbmetall der 3. oder 4. Hauptgruppe oder der 4 oder 5. Nebengruppe des Periodenssystems, insbesondere B, Al, Si, Ti, Zr, Hf, Ge, Sn, Pb, V, As, Sb oder Bi, besonders bevorzugt Si, Ti, Zr oder Sn, speziell Si;
- Ar, Ar': in Formel V sind gleich oder verschieden und stehen für einen aromatischen oder heteroaromatischen Ring, insbesondere für 2-Furyl oder Phenyl, wobei der aromatischen oder heteroaromatischen Ring gegebenenfalls 1 oder 2 Substituenten aufweist, die unter Halogen, CN, C₁-C₆-Alkyl, C₁-C₆-Alkoxy und Phenyl ausgewählt sind;
- R^{a}, R^{b}, R^{a'}, R^{b'}: sind unabhängig voneinander ausgewählt unter Wasserstoff und Methyl oder R^{a} und R^{b} und/oder R^{a'} und R^{b'} stehen jeweils gemeinsam für ein Sauerstoffatom; insbesondere stehen R^{a}, R^{b}, R^{a'}, R^{b'} jeweils für Wasserstoff;
- q: steht entsprechend der Wertigkeit von M für 0, 1 oder 2 und speziell für 1.

In Formel Va steht m für 0, 1 oder 2 und insbesondere für 0, und R ist ausgewählt unter Halogen, CN, C₁-C₆-Alkyl, C₁-C₆-Alkoxy und Phenyl und speziell unter Methyl und Methoxy.

Ein bevorzugtes Beispiel für ein Monomer der Formel V bzw. Va ist Tetrafurfuryloxysilan (Verbindung der Formel Va mit M = Si, q = 1, m = 0, R^{a} = R^{b} = Wasserstoff).

Unter den Monomeren der Formel IV sind weiterhin solche Monomere bevorzugt, worin die Gruppen X-R^{1'} und Y-R^{2'} gleich oder verschieden sind und unter C₁-C6-Alkyl, C₃-C₆-Cycloalkyl und Aryl, wie z.B. Phenyl, ausgewählt sind, d.h. X und Y stehen für eine chemische Bindung. Derartige Monomere lassen sich durch die folgenden Formeln VI bzw. VIa beschreiben:

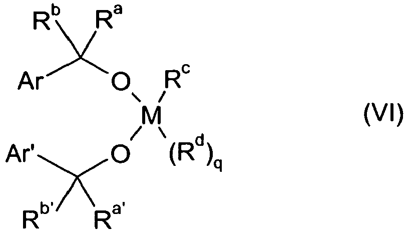

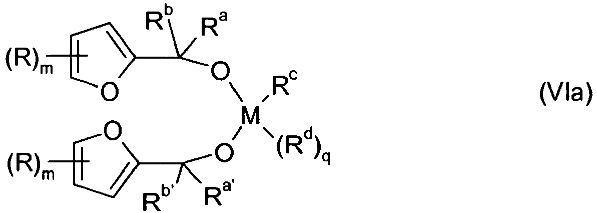

In den Formel VI und VIa haben die Variablen die folgenden Bedeutungen:
- M: steht für eine Metall oder Halbmetall, vorzugsweise ein Metall oder Halbmetall der 3. oder 4. Hauptgruppe oder der 4 oder 5. Nebengruppe des Periodenssystems, insbesondere B, Al, Si, Ti, Zr, Hf, Ge, Sn, Pb, V, As, Sb oder Bi, besonders bevorzugt Si, Ti, Zr oder Sn, speziell Si;
- Ar, Ar': in Formel VI sind gleich oder verschieden und stehen für einen aromatischen oder heteroaromatischen Ring, insbesondere für 2-Furyl oder Phenyl, wobei der aromatischen oder heteroaromatischen Ring gegebenenfalls 1 oder 2 Substituenten aufweist, die unter Halogen, CN, C₁-C₆-Alkyl, C₁-C₆-Alkoxy und Phenyl ausgewählt sind;
- R^{a}, R^{b}, R^{a'}, R^{b'}: sind unabhängig voneinander ausgewählt unter Wasserstoff und Methyl oder R^{a} und R^{b} und/oder R^{a'} und R^{b'} stehen jeweils gemeinsam für ein Sauerstoffatom; insbesondere stehen R^{a}, R^{b}, R^{a'}, R^{b'} jeweils für Wasserstoff;
- q: steht entsprechend der Wertigkeit von M für 0, 1 oder 2 und speziell für 1;
- R^{c}, R^{d}: sind gleich oder verschieden und unter C₁-C₆-Alkyl, C₃-C₆-Cycloalkyl und Aryl ausgewählt und stehen insbesondere für Methyl.

In Formel VIa steht m für 0, 1 oder 2 und insbesondere für 0, und R ist ausgewählt unter Halogen, CN, C₁-C6-Alkyl, C₁-C₆-Alkoxy und Phenyl und speziell unter Methyl und Methoxy.

Ein bevorzugtes Beispiel für ein Monomer der Formel VI bzw. VIa ist Bis(furfuryloxy)-dimethylsilan (Verbindung der Formel VIa mit M = Si, q = 1, m = 0, R^{a} = R^{b} = Wasserstoff, R^{c} = R^{d} = Methyl).

Derartige Monomere der Formeln IV, V, Va, VI bzw. VIa sind aus dem Stand der Technik bekannt, z.B. aus dem eingangs zitierten Aufsatz von Spange et al. und der darin zitierten Literatur, oder können in analoger Weise hergestellt werden.

Gemäß einer weiteren bevorzugten Ausführungsform 1 d umfassen die zu polymerisierenden Monomere M wenigstens ein Monomer der allgemeinen Formel IV, insbesondere wenigstens ein Monomer der allgemeinen Formel V, und speziell wenigstens ein Monomer der allgemeinen Formel Va, wie zuvor definiert.

Gemäß einer bevorzugten Ausführungsform 1 e copolymerisiert man ein Gemisch zweier oder mehrerer Monomere M1 und M2, wobei das Monomer M1 ein Monomer der Formel V oder Va ist und das weitere Monomer M2 ebenfalls unter den Monomeren der Formeln V oder Va ausgewählt ist, wobei sich das Monomer M1 von dem Monomer M2 in der Art der polymerisierbaren Einheit A1, also dem (Halb)Metallatom M unterscheidet. Insbesondere steht dann das (Halb)Metallatom M im Monomer M1 für Silizium und im Monomer M2 für ein von Silizium verschiedenes (Halb)Metallatom, insbesondere für Ti, Zr, Hf oder Sn und speziell für Ti.

Gemäß einer weiteren bevorzugten Ausführungsform 1f copolymerisiert man ein Gemisch zweier oder mehrerer Monomere M1 und M2, wobei das Monomer M1 ein Monomer der Formel V oder Va ist und das weitere Monomer M2 unter den Monomeren der zuvor definierten Formeln VI oder VIa ausgewählt ist. Auch hier unterscheidet sich das Monomer M1 von dem Monomer M2 in der Art der polymerisierbaren Einheit A1, nämlich dadurch, dass das Monomer M2 Liganden aufweist, die unter Polymerisationsbedingungen am Metall verbleiben können. Insbesondere steht dann das (Halb)Metallatom M im Monomer M1 für Silizium oder Titan und im Monomer M2 für Silizium.

Es hat sich allgemein als vorteilhaft herausgestellt, im Rahmen der Zwillingscopolymerisation gemäß der Ausführungsform 1 solche Monomere M1, in den das Metall oder Halbmetall M keine chemische Bindung zu einem Kohlenstoffatom aufweist, in Kombination mit Monomeren M2 zu verwenden, in denen das Metall oder Halbmetall M eine chemische Bindung zu einem Kohlenstoffatom aufweist. Aus diesem Grund ist insbesondere die Ausführungsform 1 b bevorzugt.

Sofern Monomere M1, in denen das Metall oder Halbmetall M keine chemische Bindung zu einem Kohlenstoffatom aufweist, mit Monomeren M2 kombiniert werden, in denen das Metall oder Halbmetall M eine chemische Bindung zu einem Kohlenstoffatom aufweist, so werden die Monomere M1 und M2 vorzugsweise in einem molaren Verhältnis von M1 zu M2 von 80 zu 20 bis 20 zu 80, insbesondere von 70 zu 30 bis 30 zu 70 und besonders bevorzugt von 60 zu 40 bis 40 zu 60 verwendet.

Gemäß einer bevorzugten Ausgestaltung der erfindungsgemäßen Ausführungsform 2 umfassen die zu polymerisierenden Monomere wenigstens ein Monomer M, das unter den Monomeren der Formel I ausgewählt ist und wenigstens ein weiteres, von den Monomeren der Formel I verschiedenes Monomer M' (Comonomer M'), das mit dem Monomersegment A2 in Formel I copolymerisierbar ist. Ein solches Comonomer kann beispielsweise Formaldehyd oder ein Formaldehyd-Precursor wie Paraformaldehyd oder Trioxan sein.

Gemäß einer besonders bevorzugten Ausgestaltung der erfindungsgemäßen Ausführungsform 2 umfassen die zu polymerisierenden Monomere wenigstens ein Monomer M, das unter den Monomeren der Formel II und speziell unter den Monomeren der Formel IIa ausgewählt ist und wenigstens ein weiteres, von den Monomeren der Formel II bzw. IIa verschiedenes konventionelles Monomer M' (Comonomer M'), das mit dem Monomersegment A2 in Formel II bzw. IIa copolymerisierbar ist. Ein solches Comonomer kann beispielsweise Formaldehyd oder ein Formaldehyd-Precursor wie Paraformaldehyd oder Trioxan sein.

Gemäß einer weiteren besonders bevorzugten Ausgestaltung der erfindungsgemäßen Ausführungsform 2 umfassen die zu polymerisierenden Monomere wenigstens ein Monomer M, das unter den Monomeren der Formel V und speziell unter den Monomeren der Formel Va ausgewählt ist und wenigstens ein weiteres, von den Monomeren der Formel V bzw. Va verschiedenes konventionelles Monomer M' (Comonomer M'), das mit dem Monomersegment A2 in Formel II bzw. IIa copolymerisierbar ist. Ein solches Comonomer kann beispielsweise Formaldehyd oder ein Formaldehyd-Precursor wie Paraformaldehyd oder Trioxan sein.

Die Polymerisation beziehungsweise Copolymerisation der im Rahmen der vorliegenden Erfindung verwendeten Monomere, insbesondere der Monomere der zuvor definierten allgemeinen Formeln I, II, IIa, III, IIIa, IV, V, Va, VI oder VIa kann in Analogie zu den im Stand der Technik beschriebenen Methoden erfolgen.

Die bevorzugte Initiierung der Zwillings-(co)polymerisation erfolgt durch einen Initiator I. Als Initiatoren I kommen insbesondere solche Verbindungen in Betracht, die eine kationische Polymerisation initiieren. Bevorzugt sind Brönsted-Säuren und Lewis-Säuren. Der Begriff "Polymerisation in Gegenwart eines Initiators I" bezieht sich somit auf die Initiierung und/oder Katalyse der Polymerisation vorzugsweise durch die vorgenannten Verbindungen.

Bevorzugte Brönstedt-Säuren sind organische Carbonsäuren, insbesondere Trifluoressigsäure oder Milchsäure, sowie organische Sulfonsäuren wie Methansulfonsäure, Trifluormethansulfonsäure oder Toluolsulfonsäure. Bevorzugte anorganische Brönstedtsäuren sind HCl, H₂SO₄ und HClO₄. Bevorzugte Lewis-Säuren sind BF₃, BCl₃, SnCl₄, TiCl₄, und AlCl₃. Auch der Einsatz von komplex gebundenen oder in ionischen Flüssigkeiten gelösten Lewis-Säuren ist möglich. Der Initiator I wird üblicherweise in einer Menge von 0,1 bis 10 Gew.-%, bevorzugt von 0,5 bis 5 Gew.-%, bezogen auf die Summe aller Monomere eingesetzt.

Die Herstellung der Polymerfilme kann im Rahmen der vorliegenden Erfindung grundsätzlich über unterschiedliche Methoden erfolgen.

Die Herstellung der erfindungsgemäß verwendeten Polymerfilme umfasst vorteilhaft zumindest folgende Schritte (a), (d) und (e):
(a) Bereitstellung der Monomere M1 und optional M2, eines Initiators I und gegebenenfalls eines Lösungsmittels (L) jeweils wie oben definiert;
(d) Aufbringen einer Mischung aus den gemäß Schritt (a) bereitgestellten Substanzen in nicht umgesetzter oder in vorab umgesetzter oder teil-umgesetzter Form auf eine Fläche; und
(e) Umsetzung der Mischung gemäß Schritt (d) zu einer Membran.

Geeignete Monomere M1 bzw. M2 sowie Initiatoren I wurden weiter oben ausgeführt. Das Aufbringen der Mischung gemäß Schritt (d) kann so erfolgen, dass die Monomere in einem monomeren Zustand, d. h. zunächst unreagiert, aufgebracht werden. Alternativ können die Monomere in einem vor- bzw. teil-polymerisierten Zustand (als sogenannte Präpolymere) aufgebracht werden. Eine solche Ausführungsform wird weiter unten erläutert.

Die Polymerisation kann in Substanz oder vorzugsweise in einem inerten Verdünnungsmittel durchgeführt werden. Sofern ein inertes Verdünnungsmittel verwendet wird, kommen eine Vielzahl dem Fachmann bekannter Lösungsmitteln in Betracht. Inerte Verdünnungsmittel werden im Rahmen der vorliegenden Erfindung als Lösungsmittel (L) bezeichnet. Hierdurch wird nicht zum Ausdruck gebracht, dass es sich bei den resultierenden Mischungen um echte Lösungen handelt.

Grundsätzlich weisen geeignete Lösungsmittel vorzugsweise zumindest folgende Eigenschaften auf:
- die Lösungsmittel (L) sind gegenüber den Monomeren nicht reaktiv;
- die Lösungsmittel (L) lösen die Monomere und/oder Präpolymere;
- die Lösungsmittel (L) sind ausreichend flüchtig, so dass sie aus den Filmen entfernt werden können
- die Lösungsmittel (L) weisen eine Viskosität auf, die es ermöglicht, die Mischung aufzubringen.

Geeignete Lösungsmittel (L) sind dem Fachmann an sich bekannt. Geeignete Lösungsmittel sind beispielsweise halogenierte Kohlenwasserstoff wie Dichlormethan, Trichlormethan, Dichlorethen oder Kohlenwasserstoffe wie Toluol, Xylol oder Hexan und deren Gemische. Bevorzugte Lösungsmittel sind insbesondere zyklische Ether, insbesondere Tetrahydrofuran (THF), und Ketone wie zum Beispiel Aceton, Diethylketon, Methylethylketon, Methylisobutylketon, Methyl-n-butylketon, Ethylisopropylketon, 2-Acetylfuran, 2-Methoxy-4-methylpentan-2-on, Cyclohexanon und Acetophenon, wobei Aceton und THF besonders bevorzugt sind.

Die Umsetzung der Monomere M1 und ggf. M2 kann grundsätzlich in einem weiten Bereich variieren und erfolgt vorzugsweise bei einer Temperatur von 0°C bis 150°C, besonders bevorzugt von 20°C bis 120°C, insbesondere von 40°C bis 100°C, ganz besonders bevorzugt von 70°C bis 90°C.

Vorzugsweise wird die Polymerisation der Monomere der Formel I in weitgehender Abwesenheit von Wasser durchgeführt, d.h. die Konzentration an Wasser zu Beginn der Polymerisation beträgt weniger als 0,1 Gew.-%. Dementsprechend werden als Monomere der Formel I solche Monomere bevorzugt, die unter Polymerisationsbedingungen kein Wasser abspalten. Hierzu zählen insbesondere die Monomere der Formeln II, IIa, III und IIIa.

Sofern wie unten dargestellt zunächst ein Präpolymer hergestellt wird (Schritt (b)), dann erfolgt dessen Herstellung vorzugsweise ebenfalls im Bereich der oben dargestellten Temperaturen.

Das Mischen der Monomere M1 und optional M2 sowie des Initiators (I) kann ebenso wie die Mischung der vorgenannten Verbindungen bzw. des daraus resultierenden Präpolymers mit dem Lösungsmittel (L) durch dem Fachmann bekannte Mischmethoden erfolgen, insbesondere durch Rühren.

Das Aufbringen der Mischung auf eine Fläche gemäß Schritt (d) erfolgt ebenfalls gemäß dem Fachmann bekannter Methoden der Aufbringung wie zum Beispiel Aufgießen, Aufrakeln oder spin coating.

Durch weitere Umsetzung der Monomere bzw. durch Umsetzung des resultierenden Präpolymers auf einer Fläche resultiert eine Polymerfolie. Die Dicke und Größe der Polymerfolie kann vom Fachmann eingestellt werden. Die Dicke beträgt üblicherweise von 1 bis 1000 Mikrometer, insbesondere von 10 bis 500 Mikrometer, bevorzugt von 50 bis 300 Mikrometer.

In einer bevorzugten Ausführungsform umfasst ein Verfahren zur Herstellung der erfindungsgemäß verwendeten Membrane folgende Schritte in der Reihenfolge a-b-c-d-e:
(a) Bereitstellung der Monomere M1 und optional M2, eines Initiators I und gegebenenfalls eines Lösungsmittels (L) jeweils wie oben definiert;
(b) Umsetzung der Monomere M1 und optional M2 in Gegenwart des Initiators I und gegebenenfalls des Lösungsmittels (L) zu einem Präpolymer;
(c) Mischen des erhaltenen Präpolymers mit einem Lösungsmittel (L*);
(d) Aufbringen der Mischung aus Schritt (d) auf eine Fläche; und
(e) Umsetzung des Präpolymers zu einem Polymerfilm.

Die Ausführung von Schritt (b) und (c) ermöglicht die gezielte Steuerung der Viskosität zum Zeitpunkt des Aufbringens auf die Fläche und infolgedessen vorteilhafte Eigenschaften des resultierenden Polymerfilms. Sofern unmittelbar ein Präpolymer zum Einsatz kommt, umfasst das erfindungsgemäß Verfahren die vorgenannten Schritte c-d-e.

Sofern Schritt (b) in Gegenwart eines Lösungsmittels (L) durchgeführt wird, dann handelt es sich beim Lösungsmittel L* vorzugsweise um ein mit dem Lösungsmittel L mischbares Lösungsmittel, bevorzugt um das gleiche Lösungsmittel.

Die Menge des Lösungsmittels (L*) im Rahmen von Schritt (c) kann dabei variieren. Allerdings ist darauf zu achten, dass die Viskosität der resultierenden Lösung zum Zeitpunkt des Aufbringens auf eine Fläche (Schritt (d)) nicht zu hoch ist. Der Fachmann ermittelt geeignete Kombinationen durch geeignete Vorversuche.

Die Zugabe des Lösungsmittels (L*) im Rahmen von Schritt (c) erfolgt vorzugsweise in einem Gewichtsverhältnis der Summe der Gewichtsteile der Lösungsmittel L und L* relativ zur Gewichtsmenge der Zwillingsmonomere M1 und M2 von 1 zu 1 bis 50 zu 1, vorzugsweise von 2 zu 1 bis 30 zu 1, insbesondere von 3 zu 1 bis 15 zu 1, besonders bevorzugt von 4 zu 1 bis 10 zu 1, ganz besonders bevorzugt von 5 zu 1 bis 8 zu 1.

Die Umsetzung der Monomere und/oder der Bildung der Polymerfilme können sich Reinigungsschritte und gegebenenfalls Trocknungsschritte anschließen.

Darüber hinaus können sich Alterungsschritte anschließen. Alterungsschritte werden vorzugsweise bei einer Temperatur von 60 bis 300°C, insbesondere 100 bis 250°C durchgeführt. Die Alterung dauert üblicherweise von 1 bis 1000 Minuten, insbesondere von 5 bis 60 Minuten. Die Alterung kann insbesondere in Gegenwart einer Atmosphäre durchgeführt werden, die gegenüber der Polymerfolie inert ist (Inertgasatmosphäre), insbesondere unter Stickstoff oder Edelgasen. Die Alterung der Polymerfolie kann sich günstig auf die Selektivität insbesondere gegenüber aliphatischer Verbindungen einerseits und aromatischen Verbindungen andererseits auswirken.

Es ist darüber hinaus besonders bevorzugt, nach Erhalt der Polymerfolien diese mit einer reaktiven organischen Verbindung (im Folgenden Modifizierungsmittel genannt) zu behandeln. Bei dem Modifizierungsmittel handelt es sich um eine Verbindung, welche gegenüber phenolischen Gruppen reaktiv ist. Ohne sich beschränken zu wollen besteht die Vorstellung, durch Behandlung mit dem Modifizierungsmittel phenolische Hydroxygruppen an der Oberfläche der Membran umzusetzen und so zu stabilisieren.

Als Modifizierungsmittel kommen dem Fachmann bekannte Modifizierungsmittel in Betracht, zum Beispiel reaktive Derivate organischer Säuren wie Acetanhydrid oder Benzoylchlorid oder insbesondere Organosilane. Bevorzugt können als Modifizierungsmittel Organosilane mit Halogen- oder Alkoxygruppen eingesetzt werden. Bevorzugte Organosilane mit Halogengruppen sind insbesondere Trialkylchlorsilan, besonders bevorzugt Trimethylchlorsilan. Bevorzugte Organosilane mit Alkoxygruppen sind Trioctyltrimethoxysilan, Octyltriethoxysilan, 3-Methacryloxypropyltrimethoxysilan, 3-Methacryloxypropyltriethoxysilan, Hexadecyltrimethoxysilan, Hexadecyltriethoxysilan, Dimethylpolysiloxan, Glycidyloxypropyltrimethoxysilan, Glycidyloxypropyltriethoxysilan, Nonafluorohexyltrimethoxysilan, Tridecaflourooctyltrimethoxysilan, Tridecaflourooctyltriethoxysilan, Aminopropyl-triethoxysilan. Außerdem bevorzugt verwendbar ist Hexamethyldisilazan.

Die so hergestellten Polymerfilme können vorteilhaft im erfindungsgemäßen Verfahren verwendet werden.

Das nach dem erfindungsgemäßen Verfahren erhältliche Nanokomposit-Material in Form einer Polymerfolie weist wenigstens eine anorganische oder metallorganische Polymerphase, die aus der Polymerisation des Monomersegments A1 resultiert, und wenigstens eine organische Polymerphase auf, die aus der Polymerisation des Monomersegments A2 resultiert. Die die Abmessungen der Phasendomänen in dem so erhaltenen Komposit-Material liegen im Bereich weniger Nanometer. Zudem weisen die Phasendomänen der anorganischen bzw. metallorganischen Phase und die Phasendomänen der organischen Phase eine co-kontinuierliche Anordnung auf, d.h. sowohl die organische Phase als auch die anorganische oder metallorganische Phase durchdringen sich gegenseitig und bilden im wesentlichen keine diskontinuierlichen Bereiche aus. Die Abstände zwischen benachbarten Phasengrenzen, bzw. die Abstände zwischen den Domänen benachbarter identischer Phasen sind äußerst gering und liegen im Mittel bei maximal 10 nm, vorzugsweise maximal 5 nm und insbesondere maximal 2 nm. Eine makroskopisch sichtbare Trennung in diskontinuierliche Domänen der jeweiligen Phase tritt nicht auf.

Unter dem Abstand benachbarter identischer Phasen ist z.B. der Abstand zweier Domänenen der anorganischen bzw. metallorganischen Phase, welche durch eine Domäne der organischen Polymerphase voneinander getrennt sind bzw. der Abstand zweier Domänenen der organischen Polymerphase, welche durch eine Domäne der anorganischen bzw. metallorganischen Phase voneinander getrennt sind, zu verstehen. Der mittlere Abstand zwischen den Domänen benachbarter identischer Phasen kann mittels kombinierter Röntgenkleinwinkelstreuung (SAXS - Small Angle X-Ray Scattering) über den Streuvektor q ermittelt werden (Messung in Transmission bei 20°C, monochromatisierte CuK_{α}-Strahlung, 2D-Detektor (Image-Plate), Spaltkollimation).

Bezüglich der Begriffe kontinuierliche Phasendomäne, diskontinuierliche Phasendomäne und co-kontinuierliche Phasendomäne wird auch auf W. J. Work et al.: Definitions of Terms Related to Polymer Blends, Composites and Multiphase Polymeric Materials, (IUPAC Recommendations 2004), Pure Appl. Chem., 76 (2004), S. 1985-2007, insbesondere S. 2003 verwiesen. Hiernach versteht man unter einer cokontinuierlichen Anordnung einer Zweikomponenten Mischung eine phasenseparierte Anordnung der beiden Phasen, wobei innerhalb einer Domäne der jeweiligen Phase jeder Bereich der Phasengrenzfläche der Domäne durch einen kontinuierlichen Pfad miteinander verbunden werden kann, ohne dass der Pfad eine Phasengrenzfläche durchschreitet/durchkreuzt.

In den erfindungsgemäßen Nanokompositmaterialien machen die Bereiche, in denen die organische Phase und die anorganische bzw. metallorganische Phase im wesentlichen co-kontinuierliche Phasendomänen bilden, wenigstens 80 Vol.-%, insbesondere 90 Vol.-% der Nanokompositmaterialien aus, wie sich durch kombinierte Anwendung von TEM und SAXS ermitteln lässt.

Die Dicke der Polymerfolien richtet sich nach der gewünschten Anwendung. Die Dicke des Folienmaterials wird in der Regel 500 µm, insbesondere 300 µm und speziell 100 µm nicht überschreiten (Mittelwert). In der Regel wird das Folienmaterial eine Dicke von wenigstens 5 µm, insbesondere wenigstens 10 µm aufweisen.

Die wie oben dargelegt erhältlichen nicht-porösen Polymerfolien können erfindungsgemäß zur Permeation, Gastrennung oder Pervaporation verwendet werden.

Permeation bezeichnet die Stofftrennung mittels einer Membran, wobei die treibende Kraft ein Konzentrations- oder Druckgefälle ist und die Membran eine zumindest teilweise selektive Durchlässigkeit gegenüber den zu trennenden Stoffen aufweist. Bevorzugt ist die Trennung von Gasen (Gastrennung) und die Trennung von Flüssigkeiten (Pervaporation).

Die erfindungsgemäß verwendeten Polymerfolien weisen eine selektive Permeabilität gegenüber Gasen auf, insbesondere gegenüber Stickstoff einerseits und Sauerstoff andererseits. Die erfindungsgemäß verwendeten Polymerfolien weisen außerdem eine selektive Permeabilität gegenüber aliphatischen Kohlenwasserstoffe einerseits und aromatischen Kohlenwasserstoffen andererseits auf.

### Beispiele

### A. Herstellung der Monomere

### Beispiel 1: 2,2'-Spirobis[4H-1,3,2-benzodioxasilin] (BIS)

135,77 g Salicylalkohol (1,0937 mol) wurden in wasserfreiem Toluol bei 85 °C gelöst. Anschließend wurden 83,24g (0,5469 mol) Tetramethoxysilan (TMOS) langsam zugetropft, wobei nach Zugabe eines Drittels an TMOS 0,3 mL Tetra-n-butylammoniumfluorid (1 M in THF) auf einmal eingespritzt wurde. Man rührte 1 h bei 85 °C und destillierte anschließend das Azeotrop Methanol/Toluol (63,7 °C) ab. Das restliche Toluol wurde am Rotationsverdampfer entfernt. Das Produkt wurde aus dem erhaltenen Reaktionsgemisch mit n-Hexan bei = 70 °C herausgelöst. Nach Abkühlen auf 20 °C dekantierte man die klare Lösung ab. Nach Entfernung des n-Hexans blieb die Titelverbindung als weißer Feststoff zurück. Das Produkt kann durch Lösen in Toluol und erneutem Fällen mit n-Hexan weiter von Verunreinigungen gereinigt werden.
¹H-NMR 400 MHz, CDCl₃, 25 °C, TMS) ö [ppm] = 5.21 (m, 4H,CH₂), 6.97-7.05 (m, 6H), 7.21-7.27 (M, 2H).
¹³C-NMR (100 MHz, CDCl₃, 25 °C, TMS): δ [ppm] = 66.3 (CH₂), 119.3, 122.3, 125.2, 125.7, 129.1, 152.4.
²⁹Si-CP-MAS (79.5 MHz): δ [ppm] = - 78.4

Beispiel 2: Die Herstellung von 2,2-Dimethyl-[4H-1,3,2-benzodioxasilin] erfolgte gemäß Wieber et al. Journal of Organometallic Chemistry; 1, (1963), 93, 94.

### B. Herstellung der Polymerfilme

Alle Lösungsmittel wurden in wasserfreiem Zustand verwendet. Freitragende Filme aus dem Hybridmaterial wurden in einer Apparatur hergestellt, in welcher eine Metallplatte des Durchmessers von etwas über 6 cm in einem Exsikkator unter Temperaturkontrolle im Inneren eines Thermoschranks und unter Argon (5.0) angebracht war. Die Metallplatte besaß eine Vertiefung von 5 mm mit einem Durchmesser von 6 cm und war poliert.

### Beispiel 3 (M1/M2 = 50/50; Aceton)

2,2 mmol 2,2'-Spirobi-[4H-1,3,2-Benzodioxasilin] und 2,2 mmol 2,2-Dimethyl-4H-1,3,2-Benzodioxasilin wurden unter Inertgas in einen Kolben geben. Die Mischung wurde erwärmt, bis alles geschmolzen war. Dann gab man 5 mg Milchsäure hinzu und hielt die Mischung 30 Minuten bei einer Temperatur von 85 °C. Anschließend gab man zum Präpolymer 8 ml Aceton, welches eine Temperatur von 20°C aufwies, unter intensivem Rühren zu, bis eine homogene Lösung vorlag. Dann wurde der Kolbeninhalt in oben beschriebene Apparatur gegeben und 4 h bei 85°C auspolymerisiert.

Es wurde eine klare, transparente elastische Membran erhalten, die sich rückstandslos von der Metallplatte ablösen ließ.

### Beispiel 4 (M1/M2 = 60/40; Aceton)

Analog zu Beispiel 3 wurde eine Membran aus 1,83 mmol 2,2'-Spirobi-[4H-1,3,2-Benzodioxasilin] und 2,77 mmol 2,2-Dimethyl-4H-1,3,2-Benzodioxasilin hergestellt.

### Beispiel 5 (M1/M2 = 50/50; THF)

Analog zu Beispiel 3 wurde eine Membran aus 2,2 mmol 2,2'-Spirobi-[4H-1,3,2-Benzodioxasilin] und 2,2 mmol 2,2-Dimethyl-4H-1,3,2-Benzodioxasilin hergestellt, wobei das Lösungsmittel Aceton durch THF ersetzt war.

### Beispiel 6 (M1/M2 = 60/40; THF)

Analog zu Beispiel 3 wurde eine Membran aus 1,83 mmol 2,2'-Spirobi-[4H-1,3,2-Benzodioxasilin] und 2,77 mmol 2,2-Dimethyl-4H-1,3,2-Benzodioxasilin hergestellt, wobei das Lösungsmittel Aceton durch THF ersetzt war.

### Beispiel 7 (M1/M2 = 50/50; kein Lösungsmittel)

2,2 mmol 2,2'-Spirobi-[4H-1,3,2-Benzodioxasilin] und 2,2 mmol 2,2-Dimethyl-4H-1,3,2-Benzodioxasilin wurden unter Inertgas in einen Kolben geben. Die Mischung wurde erwärmt, bis alles geschmolzen war. Dann homogenisierte man mit 5 mg Milchsäure und gab den Kolbeninhalt in die oben beschriebene Apparatur und polymerisierte 4 h bei 85°C.

### Beispiel 8 (M1/M2 = 60/40; kein Lösungsmittel)

Analog zu Bsp. 7 wurde eine Membran aus 1,83 mmol 2,2'-Spirobi-[4H-1,3,2-Benzodioxasilin] und 2,77 mmol 2,2-Dimethyl-4H-1,3,2-Benzodioxasilin hergestellt.

Die transparenten, elastischen nicht-porösen Polymerfilme zeigten nach einer Zeit von 30 Tagen deutliche Alterungserscheinungen, die sich bei Lichteinfluss in einer braunen Verfärbung des Polymerfilms bemerkbar machten.

### Eigenschaften der Membrane: Pervaporation

Es wurden Sorptionsuntersuchungen von Lösungsmitteln an den gemäß den Beispielen 4, 6 und 8 erhaltenen Polymerfolien durchgeführt. Dabei wurden sowohl ungetemperte Proben (4-u, 6-u und 8-u), als auch bei 200 °C für 20 min gealterte Membranproben (4-a, 6-a und 8-a) untersucht. Für die Sorptionsuntersuchungen wurden die Membranproben vorgewogen und anschließend in verschließbare Glasgefäße mit dem entsprechenden Lösungsmittel bei Raumtemperatur gelegt. In Abständen von ca. 1-2 Stunden wurden die Proben aus dem Lösungsmittel herausgenommen und auf ihre Beschaffenheit hin untersucht. Die Proben wurden leicht abgetupft und dann gewogen, um die Gewichtsveränderung in Gew.-% zu bestimmen.

Dabei zeigten protische und aromatische Lösungsmittel wie z.B. H₂O, Ethanol und Toluol hohe Affinitäten zum Hybridmaterial. Es hat sich gezeigt, dass das Auflösungsverhalten der Hybridmaterial-Membran gegenüber diesen Lösungsmitteln durch die Alterung eliminiert werden konnte. Die gealterten Polymerfolien verzeichneten beispielsweise bei Toluol eine Gewichtzunahme von nur noch ca. 10 Gew.-%, während bei den nicht gealterten Polymerfolien 19,5 Gew.-% herausgelöst wurden.

Gealterte und nicht gealterte Polymerfolien zeigten vergleichbare Quellungsbeständigkeit gegenüber aliphatischen Lösungsmitteln wie z.B. Cyclohexan und n-Dodecan. Auf Grund dieser Ergebnisse können die Polymerfolien gemäß der vorliegenden Erfindung vorteilhaft als organophile Membranen zur Trennung aliphatischer/aromatischer Gemische eingesetzt werden.

## Patentansprüche

1. Verfahren zur Trennung von Stoffgemischen mittels eines nicht-porösen Polymerfilms, der
(a) wenigstens eine anorganische oder metallorganische Phase und
(b) wenigstens eine organische Polymerphase
aufweist, wobei der Polymerfilm durch Polymerisation wenigstens eines Monomers erhältlich ist, das wenigstens ein erstes polymerisierbares Monomersegment A1 enthaltend wenigstens ein Metall oder Halbmetall M und wenigstens ein zweites polymerisierbares organisches Monomersegment A2 aufweist, das über eine kovalente chemische Bindung mit dem polymerisierbaren Monomersegment A1 verbunden ist, unter Polymerisationsbedingungen, unter denen sowohl das polymerisierbare Monomersegment A1 als auch das polymerisierbare organische Monomersegment A2 unter Bruch der kovalenten chemischen Bindung zwischen A1 und A2 polymerisieren.

2. Verfahren nach Anspruch 1, wobei das Verfahren ein Verfahren zur Gastrennung ist.

3. Verfahren nach Anspruch 1, wobei das Verfahren ein Verfahren zur Pervaporation ist.

4. Verfahren nach den Ansprüchen 1 bis 3, wobei die zu polymerisierenden Monomere ein erstes Monomer M1 und wenigstens ein zweites Monomer M2 umfassen, wobei sich die Monomere M2 zumindest in einer der Monomersegmente A1 oder A2 von dem Monomer M1 unterscheiden, oder wobei die zu polymerisierenden Monomere neben dem wenigstens einen zu polymerisierenden Monomer wenigstens ein weiteres, davon verschiedenes Monomer ohne Monomersegment A1 umfassen, das mit dem Monomersegment A2 copolymerisierbar ist.

5. Verfahren nach den Ansprüchen 1 bis 4, wobei das Metall oder Halbmetall M des Monomersegments A1 ausgewählt ist unter B, Al, Si, Ti, Zr, Hf, Ge, Sn, Pb, V, As, Sb, Bi und deren Mischungen.

6. Verfahren nach den Ansprüchen 1 bis 5, wobei das Metall oder Halbmetall M des Monomersegments A1 zu wenigstens 90 mol-%, bezogen auf die Gesamtmenge an M, Silizium umfasst.

7. Verfahren nach einem der vorhergehenden Ansprüche, wobei die zu polymerisierenden Monomere, welche wenigstens ein Monomersegment A1 und wenigstens ein Monomersegment A2 aufweisen, ein erstes Monomer M1 und wenigstens ein zweites Monomer M2 umfassen, das sich zumindest in dem Monomersegment A1 von dem Monomer M1 unterscheidet.

8. Verfahren nach einem der vorhergehenden Ansprüche, wobei die Monomere, welche wenigstens ein Monomersegment A1 und wenigstens ein Monomersegment A2 aufweisen, durch die allgemeine Formel I beschrieben werden: 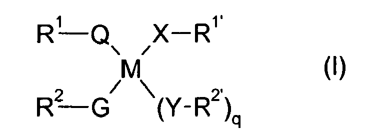 worin
M für eine Metall oder Halbmetall steht;
R¹, R² gleich oder verschieden sein können und für einen Rest Ar-C(R^{a},R^{b})- stehen, worin Ar für einen aromatischen oder heteroaromatischen Ring steht, der gegebenenfalls 1 oder 2 Substituenten aufweist, die unter Halogen, CN, C₁-C₆-Alkyl, C₁-C₆-Alkoxy und Phenyl ausgewählt sind und R^{a}, R^{b} unabhängig voneinander für Wasserstoff oder Methyl stehen oder gemeinsam ein Sauerstoffatom bedeuten,
oder die Reste R¹Q und R²G für einen Rest der Formel A 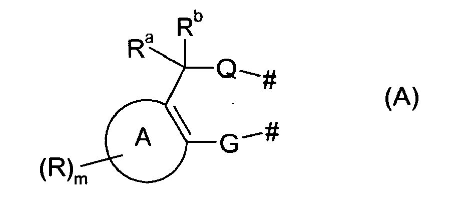 steht, worin A für einen an die Doppelbindung kondensierten aromatischen oder heteroaromatischen Ring steht, m für 0, 1 oder 2 steht, R gleich oder verschieden sein kann und unter Halogen, CN, C₁-C₆-Alkyl, C₁-C₆-Alkoxy und Phenyl ausgewählt ist und R^{a}, R^{b} die zuvor genannten Bedeutungen aufweisen;
G für O, S oder NH steht;
Q für O, S oder NH steht;
q entsprechend der Wertigkeit von M für 0, 1 oder 2 steht,
X, Y gleich oder verschieden sein können und für O, S, NH oder eine chemische Bindung stehen;
R^{1'}, R^{2'} gleich oder verschieden sein können und für C₁-C₆-Alkyl, C₃-C₆-Cycloalkyl, Aryl oder einen Rest Ar'-C(R^{a'},R^{b'})- stehen, worin Ar' die für Ar angegebenen Bedeutungen hat und R^{a'}, R^{b'} die für R^{a}, R^{b} angegebenen Bedeutungen aufweisen oder R^{1'}, R^{2'} gemeinsam mit X und Y für einen Rest der Formel A, wie zuvor definiert, stehen.

9. Verfahren nach einem der vorhergehenden Ansprüche, wobei die zu polymerisierenden Monomere, welche wenigstens ein Monomersegment A1 und wenigstens ein Monomersegment A2 aufweisen, wenigstens ein Monomer der allgemeinen Formel II umfassen: 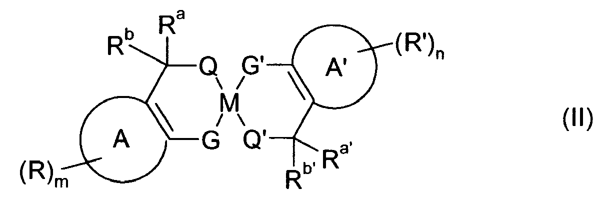 worin
M für eine Metall oder Halbmetall steht;
A und A' für einen an die Doppelbindung kondensierten aromatischen oder heteroaromatischen Ring steht;
m und n unabhängig voneinander für 0, 1 oder 2 stehen;
G und G' gleich oder verschieden sind und unabhängig voneinander für O, S oder NH stehen;
Q und Q' gleich oder verschieden sind und unabhängig voneinander für O, S oder NH stehen;
R und R' gleich oder verschieden sind und unabhängig voneinander unter Halogen, CN, C₁-C₆-Alkyl, C₁-C₆-Alkoxy und Phenyl ausgewählt sind; und
R^{a}, R^{b}, R^{a'}, R^{b'} unabhängig voneinander ausgewählt sind unter Wasserstoff und Methyl oder R^{a} und R^{b} und/oder R^{a'} und R^{b'} jeweils gemeinsam für ein Sauerstoffatom stehen.

10. Verfahren nach dem vorhergehenden Anspruch, wobei die zu polymerisierenden Monomere, welche wenigstens ein Monomersegment A1 und wenigstens ein Monomersegment A2 aufweisen, ein erstes Monomer M1 und wenigstens ein zweites Monomer M2 umfassen, das sich zumindest in einem der Monomersegmente A1 von dem Monomer M1 unterscheidet, wobei das Monomer M1 ausgewählt ist unter den Monomeren der Formel II und wobei das wenigstens eine weitere Monomer M2 ausgewählt ist unter den Monomeren der Formel III: 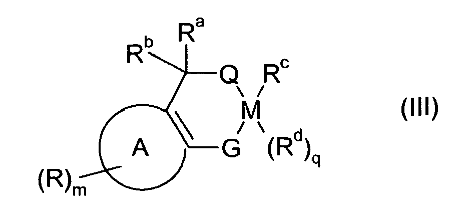 worin
M für eine Metall oder Halbmetall steht;
A für einen an die Doppelbindung kondensierten aromatischen oder heteroaromatischen Ring steht;
m für 0, 1 oder 2 steht;
G für O, S oder NH steht;
Q für O, S oder NH steht;
R unabhängig voneinander unter Halogen, CN, C₁-C₆-Alkyl, C₁-C₆-Alkoxy und Phenyl ausgewählt sind;
R^{a}, R^{b} unabhängig voneinander ausgewählt sind unter Wasserstoff und Methyl oder R^{a} und R^{b} gemeinsam für ein Sauerstoffatom stehen, und
R^{c}, R^{d} gleich oder verschieden sind und unter C₁-C₆-Alkyl, C₃-C₆-Cycloalkyl und Aryl ausgewählt sind.

11. Verfahren nach Anspruch 9 oder 10, wobei die zu polymerisierenden Monomere, welche wenigstens ein Monomersegment A1 und wenigstens ein Monomersegment A2 aufweisen, ein erstes Monomer M1 und wenigstens ein zweites Monomer M2 umfassen, das sich in den Monomersegmenten A2 und gegebenenfalls A1 von dem Monomer M1 unterscheidet, wobei das Monomer M1 ausgewählt ist unter den Monomeren der Formel II und wobei das wenigstens eine weitere Monomer M2 ausgewählt ist unter den Monomeren der Formel IV: 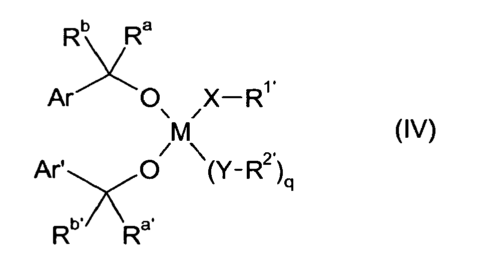 worin
M für eine Metall oder Halbmetall steht;
Ar, Ar' gleich oder verschieden sind und für einen aromatischen oder heteroaromatischen Ring stehen, der gegebenenfalls 1 oder 2 Substituenten aufweist, die unter Halogen, CN, C₁-C₆-Alkyl, C₁-C₆-Alkoxy und Phenyl ausgewählt sind;
R^{a}, R^{b}, R^{a'}, R^{b'} unabhängig voneinander ausgewählt sind unter Wasserstoff und Methyl oder R^{a} und R^{b} und/oder R^{a'} und R^{b'} jeweils gemeinsam für ein Sauerstoffatom stehen;
q entsprechend der Wertigkeit von M für 0, 1 oder 2 steht;
X, Y gleich oder verschieden sein können und für O, S, NH oder eine chemische Bindung stehen; und
R^{1'}, R^{2'} gleich oder verschieden sein können und für C₁-C₆-Alkyl, C₃-C₆-Cycloalkyl, Aryl oder einen Rest Ar"-C(R^{a"},R^{b"})- stehen, worin Ar' die für Ar angegebenen Bedeutungen hat und R^{a"}, R^{b"} die für R^{a}, R^{b} angegebenen Bedeutungen aufweisen oder R^{1'}, R^{2'} gemeinsam mit X und Y für einen Rest der Formel A, wie zuvor definiert, stehen.

12. Verfahren nach einem der vorhergehenden Ansprüche, wobei die zu polymerisierenden Monomere, welche wenigstens ein Monomersegment A1 und wenigstens ein Monomersegment A2 aufweisen, wenigstens ein Monomer der allgemeinen Formel V umfassen: 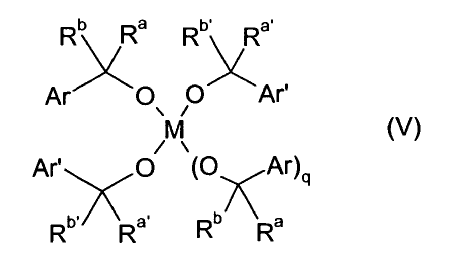 worin
M für eine Metall oder Halbmetall steht;
Ar, Ar' gleich oder verschieden sind und für einen aromatischen oder heteroaromatischen Ring stehen, der gegebenenfalls 1 oder 2 Substituenten aufweist, die unter Halogen, CN, C₁-C₆-Alkyl, C₁-C₆-Alkoxy und Phenyl ausgewählt sind;
R^{a}, R^{b}, R^{a'}, R^{b'} unabhängig voneinander ausgewählt sind unter Wasserstoff und Methyl oder R^{a} und R^{b} und/oder R^{a'} und R^{b'} jeweils gemeinsam für ein Sauerstoffatom stehen; und
q entsprechend der Wertigkeit von M für 0, 1 oder 2 steht.

13. Verfahren nach dem vorhergehenden Anspruch, wobei die zu polymerisierenden Monomere, welche wenigstens ein Monomersegment A1 und wenigstens ein Monomersegment A2 aufweisen, ein erstes Monomer M1 und wenigstens ein zweites Monomer M2 umfassen, das sich zumindest in dem Monomersegment A1 von dem Monomer M1 unterscheidet, wobei das Monomer M1 ausgewählt ist unter einem Monomer der Formel V und wobei das wenigstens eine weitere Monomer M2 ausgewählt ist unter den Monomeren der Formel V, die sich im (Halb)metall M von dem Monomer M1 unterscheiden.

14. Verfahren nach einem der vorhergehenden Ansprüche, wobei die zu polymerisierenden Monomere, welche wenigstens ein Monomersegment A1 und wenigstens ein Monomersegment A2 aufweisen, ein erstes Monomer M1 und wenigstens ein zweites Monomer M2 umfassen, das sich in den Monomersegmenten A1 und A2 von dem Monomer M1 unterscheidet, wobei das Monomer M1 ausgewählt ist unter den Monomeren der Formel V und wobei das wenigstens eine weitere Monomer M2 ausgewählt ist unter den Monomeren der Formel III wie in Anspruch 12 definiert.

15. Verfahren nach einem der vorhergehenden Ansprüche, wobei die zu polymerisierenden Monomere, welche wenigstens ein Monomersegment A1 und wenigstens ein Monomersegment A2 aufweisen, ein erstes Monomer M1 und wenigstens ein zweites Monomer M2 umfassen, das sich zumindest in dem Monomersegment A1 von dem Monomer M1 unterscheidet, wobei das Monomer M1 ausgewählt ist unter den Monomeren der Formel V und wobei das wenigstens eine weitere Monomer M2 ausgewählt ist unter den Monomeren der Formel VI: 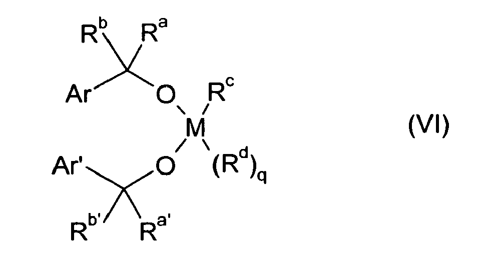 worin
M für eine Metall oder Halbmetall steht;
Ar, Ar' gleich oder verschieden sind und für einen aromatischen oder heteroaromatischen Ring stehen, der gegebenenfalls 1 oder 2 Substituenten aufweist, die unter Halogen, CN, C₁-C₆-Alkyl, C₁-C₆-Alkoxy und Phenyl ausgewählt sind;
R^{a}, R^{b}, R^{a'}, R^{b'} unabhängig voneinander ausgewählt sind unter Wasserstoff und Methyl oder R^{a} und R^{b} und/oder R^{a'} und R^{b'} jeweils gemeinsam für ein Sauerstoffatom stehen;
q entsprechend der Wertigkeit von M für 0, 1 oder 2 steht; und
R^{c}, R^{d} gleich oder verschieden sind und unter C₁-C₆-Alkyl, C₃-C₆-Cycloalkyl und Aryl ausgewählt sind.

16. Verfahren nach einem der vorhergehenden Ansprüche, wobei die Polymerisation durch einen Initiator I initiiert wird, welcher ausgewählt ist aus der Gruppe bestehend aus Lewis-Säuren und Brönsted-Säuren.

17. Verfahren nach einem der vorhergehenden Ansprüche umfassend
(b) Umsetzung der Monomere M1 und optional M2 in Gegenwart des Initiators I und gegebenenfalls des Lösungsmittels (L) zu einem Präpolymer;
(d) Aufbringen der Mischung aus Schritt (b) auf eine Fläche; und
(e) Umsetzung des Präpolymers zu einem Polymerfilm.

18. Verfahren gemäß dem vorhergehenden Anspruch umfassend
(a) Bereitstellung der Monomere M1 und optional M2, eines Initiators I und gegebenenfalls eines Lösungsmittels (L) jeweils wie oben definiert;
(b) Umsetzung der Monomere M1 und optional M2 in Gegenwart des Initiators I und gegebenenfalls des Lösungsmittels (L) zu einem Präpolymer;
(c) Mischen des erhaltenen Präpolymers mit einem Lösungsmittels (L*);
(d) Aufbringen der Mischung aus Schritt (d) auf eine Fläche; und
(e) Umsetzung des Präpolymers zu einem Polymerfilm.

19. Verwendung von nicht-porösen Polymerfilmen erhältlich wie in den Ansprüchen 1 bis 18 definiert zur Permeation, Gastrennung oder Pervaporation.

## Claims

1. A process for separating substance mixtures by means of a nonporous polymer film which has
(a) at least one inorganic or organometallic phase and
(b) at least one organic polymer phase,
wherein the polymer film is obtainable by polymerizing at least one monomer which has at least one first polymerizable monomer segment A1 comprising at least one metal or semimetal M and at least one second polymerizable organic monomer segment A2 which is connected to the polymerizable monomer segment A1 via a covalent chemical bond, under polymerization conditions under which both the polymerizable monomer segment A1 and the polymerizable organic monomer segment A2 polymerize with breakage of the covalent chemical bond between A1 and A2.

2. The process according to claim 1, which is a process for gas separation.

3. The process according to claim 1, which is a process for pervaporation.

4. The process according to claims 1 to 3, wherein the monomers to be polymerized comprise a first monomer M1 and at least one second monomer M2, the monomers M2 differing from the monomer M1 at least in one of the monomer segments A1 and A2, or the monomers to be polymerized, as well as the at least one monomer to be polymerized, comprising at least one further, different monomer which has no monomer segment A1 and is copolymerizable with the monomer segment A2.

5. The process according to claims 1 to 4, wherein the metal or semimetal M of the monomer segment A1 is selected from B, Al, Si, Ti, Zr, Hf, Ge, Sn, Pb, V, As, Sb, Bi and mixtures thereof.

6. The process according to claims 1 to 5, wherein the metal or semimetal M of the monomer segment A1 comprises silicon to an extent of at least 90 mol%, based on the total amount of M.

7. The process according to any of the preceding claims, wherein the monomers to be polymerized, which have at least one monomer segment A1 and at least one monomer segment A2, comprise a first monomer M1 and at least one second monomer M2 which differs from the monomer M1 at least in the monomer segment A1.

8. The process according to any of the preceding claims, wherein the monomers which have at least one monomer segment A1 and at least one monomer segment A2 are described by the general formula I: 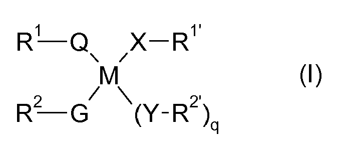 in which
M is a metal or semimetal;
R¹, R² may be the same or different and are each an Ar-C(R^{a},R^{b})- radical in which Ar is an aromatic or heteroaromatic ring which optionally has 1 or 2 substituents selected from halogen, CN, C₁-C₆-alkyl, C₁-C₆-alkoxy and phenyl, and R^{a}, R^{b} are each independently hydrogen or methyl or together are an oxygen atom, or the R¹Q and R²G radicals are each a radical of the formula A 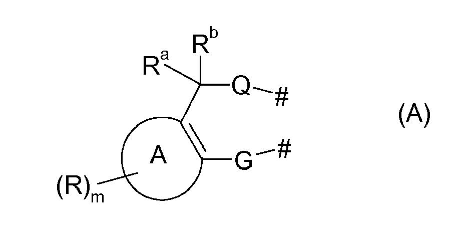 in which A is an aromatic or heteroaromatic ring fused to the double bond, m is 0, 1 or 2, R may be the same or different and is selected from halogen, CN, C₁-C₆-alkyl, C₁-C₆-alkoxy and phenyl, and R^{a}, R^{b} are each as defined above;
G is O, S or NH;
Q is O, S or NH;
q according to the valency of M is 0, 1 or 2,
X, Y may be the same or different and are each O, S, NH or a chemical bond;
R^{1'}, R^{2'} may be the same or different and are each C₁-C₆-alkyl, C₃-C₆-cycloalkyl, aryl or an Ar'-C(R^{a'},R^{b'})- radical in which Ar' is as defined for Ar and R^{a'}, R^{b'} are each as defined for R^{a}, R^{b}, or R^{1'}, R^{2'} together with X and Y are a radical of the formula A, as defined above.

9. The process according to any of the preceding claims, wherein the monomers to be polymerized, which have at least one monomer segment A1 and at least one monomer segment A2, comprise at least one monomer of the general formula II: 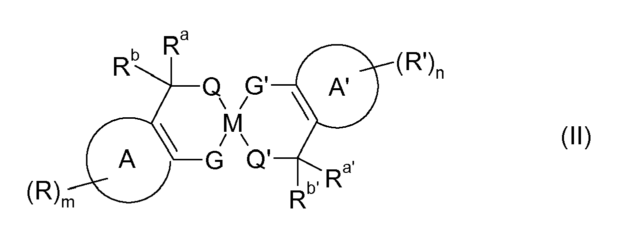 in which
M is a metal or semimetal;
A and A' are each an aromatic or heteroaromatic ring fused to the double bond;
m and n are each independently 0, 1 or 2;
G and G' are the same or different and are each independently O, S or NH;
Q and Q' are the same or different and are each independently O, S or NH;
R and R' are the same or different and are each independently selected from halogen, CN, C₁-C₆-alkyl, C₁-C₆-alkoxy and phenyl; and
R^{a}, R^{b}, R^{a'}, R^{b'} are each independently selected from hydrogen and methyl, or R^{a} and R^{b} and/or R^{a'} and R^{b'} in each case together are an oxygen atom.

10. The process according to the preceding claim, wherein the monomers to be polymerized, which have at least one monomer segment A1 and at least one monomer segment A2, comprise a first monomer M1 and at least one second monomer M2 which differs from the monomer M1 at least in one of the monomer segments A1, the monomer M1 being selected from the monomers of the formula II and the at least one further monomer M2 being selected from the monomers of the formula III: 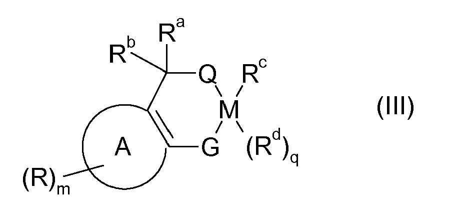 in which
M is a metal or semimetal;
A is an aromatic or heteroaromatic ring fused to the double bond;
m is 0, 1 or 2;
G is O, S or NH;
Q is O, S or NH;
R is independently selected from halogen, CN, C₁-C₆-alkyl, C₁-C₆-alkoxy and phenyl;
R^{a}, R^{b} are each independently selected from hydrogen and methyl, or R^{a} and R^{b} together are an oxygen atom, and
R^{c}, R^{d} are the same or different and are selected from C₁-C₆-alkyl, C₃-C₆-cycloalkyl and aryl.

11. The process according to claim 9 or 10, wherein the monomers to be polymerized, which have at least one monomer segment A1 and at least one monomer segment A2, comprise a first monomer M1 and at least one second monomer M2 which differs from the monomer M1 in the monomer segments A2 and optionally A1, the monomer M1 being selected from the monomers of the formula II and the at least one further monomer M2 being selected from the monomers of the formula IV: 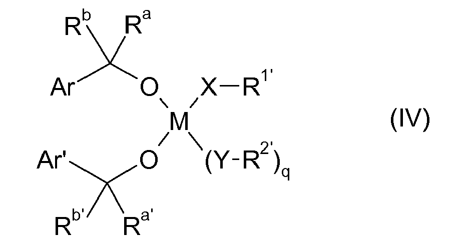 in which:
M is a metal or semimetal;
Ar, Ar' are the same or different and are each an aromatic or heteroaromatic ring which optionally has 1 or 2 substituents selected from halogen, CN, C₁-C₆-alkyl, C₁-C₆-alkoxy and phenyl;
R^{a}, R^{b}, R^{a'}, R^{b'} are each independently selected from hydrogen and methyl, or R^{a} and R^{b} and/or R^{a'} and R^{b'} in each case together are an oxygen atom;
q according to the valency of M is 0, 1 or 2;
X, Y may be the same or different and are each O, S, NH or a chemical bond; and
R^{1'}, R^{2'} may be the same or different and are each C₁-C₆-alkyl, C₃-C₆-cycloalkyl, aryl or an Ar''-C(R^{a''},R^{b''})- radical in which Ar' is as defined for Ar and R^{a''}, R^{b''} are each as defined for R^{a}, R^{b}, or R^{1'}, R^{2'} together with X and Y are a radical of the formula A as defined above.

12. The process according to any of the preceding claims, wherein the monomers to be polymerized, which have at least one monomer segment A1 and at least one monomer segment A2, comprise at least one monomer of the general formula V: 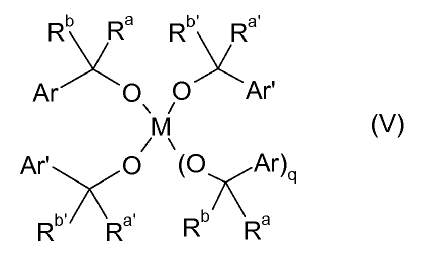 in which
M is a metal or semimetal;
Ar, Ar' are the same or different and are each an aromatic or heteroaromatic ring which optionally has 1 or 2 substituents selected from halogen, CN, C₁-C₆-alkyl, C₁-C₆-alkoxy and phenyl;
R^{a}, R^{b}, R^{a'}, R^{b'} are each independently selected from hydrogen and methyl, or R^{a} and R^{b} and/or R^{a'} and R^{b'} in each case together are an oxygen atom; and
q according to the valency of M is 0, 1 or 2.

13. The process according to the preceding claim, wherein the monomers to be polymerized, which have at least one monomer segment A1 and at least one monomer segment A2, comprise a first monomer M1 and at least one second monomer M2 which differs from the monomer M1 at least in the monomer segment A1, the monomer M1 being selected from a monomer of the formula V and the at least one further monomer M2 being selected from the monomers of the formula V which differ from the monomer M1 in the (semi)metal M.

14. The process according to any of the preceding claims, wherein the monomers to be polymerized, which have at least one monomer segment A1 and at least one monomer segment A2, comprise a first monomer M1 and at least one second monomer M2 which differs from the monomer M1 in the monomer segments A1 and A2, the monomer M1 being selected from the monomers of the formula V and the at least one further monomer M2 being selected from the monomers of the formula III as defined in claim 12.

15. The process according to any of the preceding claims, wherein the monomers to be polymerized, which have at least one monomer segment A1 and at least one monomer segment A2, comprise a first monomer M1 and at least one second monomer M2 which differs from the monomer M1 at least in the monomer segment A1, the monomer M1 being selected from the monomers of the formula V and the at least one further monomer M2 being selected from the monomers of the formula VI: 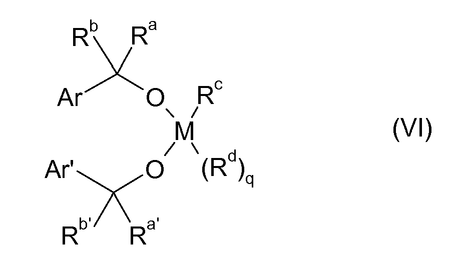 in which
M is a metal or semimetal;
Ar, Ar' are the same or different and are each an aromatic or heteroaromatic ring which optionally has 1 or 2 substituents selected from halogen, CN, C₁-C₆-alkyl, C₁-C₆-alkoxy and phenyl;
R^{a}, R^{b}, R^{a'}, R^{b'} are each independently selected from hydrogen and methyl, or R^{a} and R^{b} and/or R^{a'} and R^{b'} in each case together are an oxygen atom;
q according to the valency of M is 0, 1 or 2; and
R^{c}, R^{d} are the same or different and are each selected from C₁-C₆-alkyl, C₃-C₆-cycloalkyl and aryl.

16. The process according to any of the preceding claims, wherein the polymerization is initiated by an initiator I which is selected from the group consisting of Lewis acids and Brønsted acids.

17. The process according to any of the preceding claims, comprising
(b) reacting the monomers M1 and optionally M2 in the presence of the initiator I and optionally of the solvent (L) to give a prepolymer;
(d) applying the mixture from step (b) to a surface; and
(e) converting the prepolymer to a polymer film.

18. The process according to the preceding claim, comprising
(a) providing the monomers M1 and optionally M2, an initiator I and optionally a solvent (L), each as defined above;
(b) reacting the monomers M1 and optionally M2 in the presence of the initiator I and optionally of the solvent (L) to give a prepolymer;
(c) mixing the resulting prepolymer with a solvent (L*);
(d) applying the mixture from step (d) to a surface; and
(e) converting the prepolymer to a polymer film.

19. The use of nonporous polymer films obtainable as defined in claims 1 to 18 for permeation, gas separation or pervaporation.

## Revendications

1. Procédé pour la séparation de mélanges de substances à l'aide d'un film polymère non poreux, qui comprend
a) au moins une phase inorganique ou organométallique, et
(b) au moins une phase polymère organique,
le film polymère pouvant être obtenu par polymérisation d'au moins un monomère qui comprend au moins un segment monomère polymérisable A1 contenant au moins un métal ou un métalloïde M et au moins un deuxième segment monomère organique polymérisable A2, qui est relié par l'intermédiaire d'une liaison chimique covalente au segment monomère polymérisable A1, dans des conditions de polymérisation dans lesquelles tant le segment monomère polymérisable A1 que le segment monomère organique polymérisable A2 se polymérisent avec rupture de la liaison chimique covalente entre A1 et A2.

2. Procédé selon la revendication 1, le procédé étant un procédé pour la séparation de gaz.

3. Procédé selon la revendication 1, le procédé étant un procédé de pervaporation.

4. Procédé selon les revendications 1 à 3, dans lequel les monomères à polymériser comprennent un premier monomère M1 et au moins un deuxième monomère M2, les monomères M2 se distinguant au moins par l'un des segments monomères A1 ou A2 du monomère M1, ou les monomères à polymériser comprennent, outre le ou les monomères à polymériser, au moins un monomère supplémentaire, qui en est différent, sans le segment monomère A1, et qui est copolymérisable avec le segment monomère A2.

5. Procédé selon les revendications 1 à 4, dans lequel le métal ou le métalloïde M du segment monomère A1 est choisi parmi B, Al, Si, Ti, Zr, Hf, Ge, Sn, Pb, V, As, Sb, Bi et les mélanges de ceux-ci.

6. Procédé selon les revendications 1 à 5, dans lequel le métal ou le métalloïde M du segment monomère A1 comprend au moins 90 % en moles de silicium par rapport à la quantité totale de M.

7. Procédé selon l'une des revendications précédentes, dans lequel les monomères à polymériser, qui comprennent au moins un segment monomère A1 et au moins un segment monomère A2, comprennent un premier monomère M1 et au moins un deuxième monomère M2 qui se distingue au moins par le segment monomère A1 du monomère M1.

8. Procédé selon l'une des revendications précédentes, dans lequel les monomères qui comprennent au moins un segment monomère A1 et au moins un segment monomère A2 sont décrits par la formule générale I 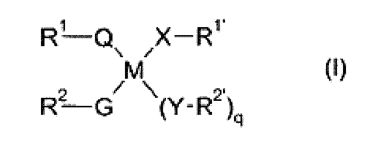 dans laquelle
M est un métal ou un métalloïde ;
R¹, R² peuvent être identiques ou différents et représentent chacun un radical Ar-C(R^{a},R^{b})-, dans lequel Ar désigne un noyau aromatique ou hétéroaromatique qui comprend au moins un ou deux substituants choisis parmi les substituants halogéno, CN, alkyle en C₁-C₆, alcoxy en C₁-C₆ et phényle, et R^{a}, R^{b} représentent chacun indépendamment de l'autre un atome d'hydrogène ou le groupe méthyle, ou représentent ensemble un atome d'oxygène,
ou les radicaux R¹Q et R²G représentent chacun un radical de formule A 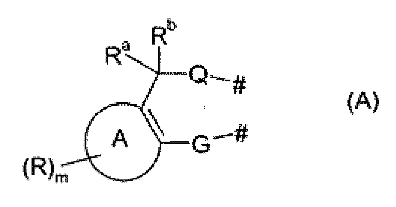 dans laquelle A représente un noyau aromatique ou hétéroaromatique condensé au niveau de la double liaison, m vaut 0, 1 ou 2, les radicaux R peuvent être identiques ou différents et sont choisis parmi les groupes halogéno, CN, alkyle en C₁-C₆, alcoxy en C₁-C₆ et phényle, et R^{a}, R^{b} ont les significations données ci-dessus ;
G représente O, S ou NH ;
Q représente O, S ou NH ;
q vaut 0, 1 ou 2, selon la valence de M,
X, Y peuvent être identiques ou différents et représentent chacun O, S, NH ou une liaison chimique ;
R^{1'}, R^{2'} peuvent être identiques ou différents et représentent chacun un groupe alkyle en C₁-C₆, cycloalkyle en C₃-C₆, aryle ou un radical Ar'-C(R^{a'},R^{b'})- où Ar' a les significations données pour Ar, et R^{a'}, R^{b'} ont les significations données pour R^{a}, R^{b}, ou R^{1'}, R^{2'}, avec X et Y, représentent un radical de formule A tel que défini ci-dessus.

9. Procédé selon l'une des revendications précédentes, dans lequel les monomères à polymériser, qui comprennent au moins un segment monomère A1 et au moins un segment monomère A2, comprennent au moins un monomère de formule générale II : 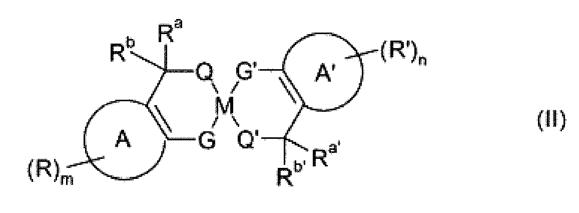 dans laquelle
M représente un métal ou un métalloïde ;
A et A' représentent chacun un noyau aromatique ou hétéroaromatique condensé au niveau de la double liaison ;
m et n valent chacun indépendamment de l'autre 0, 1 ou 2 ;
G et G' sont identiques ou différents et représentent chacun indépendamment de l'autre O, S ou NH ;
Q et Q' sont identiques ou différents et représentent chacun indépendamment de l'autre O, S ou NH ;
R et R' sont identiques ou différents et sont choisis chacun indépendamment de l'autre parmi les groupes halogéno, CN, alkyle en C₁-C₆, alcoxy en C₁-C₆ ou phényle ; et
R^{a}, R^{b}, R^{a'}, R^{b'} sont choisis chacun indépendamment des autres parmi l'atome d'hydrogène et le groupe méthyle, ou R^{a} et R^{b}, et/ou R^{a'} et R^{b'}, représentent chacun ensemble un atome d'oxygène.

10. Procédé selon la revendication précédente, dans lequel les monomères à polymériser, qui comprennent au moins un segment monomère A1 et au moins un segment monomère A2, comprennent un premier monomère M1 et au moins un deuxième monomère M2, qui se distingue au moins par l'un des segments monomères A1 du monomère M1, le monomère M1 étant choisi parmi les monomères de formule II, le ou les monomères M2 supplémentaires étant choisis parmi les monomères de formule III 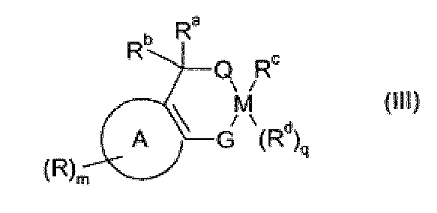 dans laquelle
M représente un métal ou un métalloïde ;
A représente un noyau aromatique ou hétéroaromatique condensé au niveau de la double liaison ;
m vaut 0, 1 ou 2 ;
G représente O, S ou NH ;
Q représente O, S ou NH ;
les radicaux R représentent chacun indépendamment des autres un groupe halogéno, CN, alkyle en C₁-C₆, alcoxy en C₁-C₆ et phényle ;
R^{a}, R^{b} sont choisis chacun indépendamment de l'autre parmi l'atome d'hydrogène et le groupe méthyle, ou R^{a} et R^{b} représentent ensemble un atome d'oxygène, et
R^{c}, R^{d} sont identiques ou différents et sont choisis parmi les groupes alkyle en C₁-C₆, cycloalkyle en C₃-C₆ et aryle.

11. Procédé selon la revendication 9 ou 10, dans lequel les monomères à polymériser, qui comprennent au moins un segment monomère A1 et au moins un segment monomère A2, comprennent un premier monomère M1 et au moins un deuxième monomère M2, qui se distingue par les segments monomères A2 et éventuellement A1 du monomère M1, le monomère M1 étant choisi parmi les monomères de formule II, le ou les monomères supplémentaires M2 étant choisis parmi les monomères de formule IV 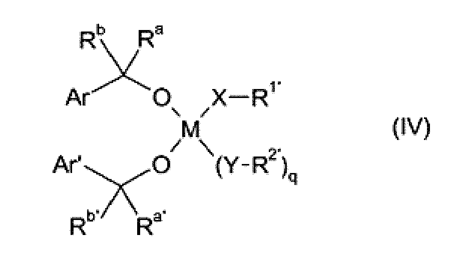 dans laquelle
M représente un métal ou un métalloïde ;
Ar, Ar' sont identiques ou différents et représentent chacun un noyau aromatique ou hétéroaromatique comprenant éventuellement 1 ou 2 substituants choisis parmi les groupes halogéno, CN, alkyle en C₁-C₆, alcoxy en C₁-C₆ et phényle ;
R^{a}, R^{b}, R^{a'}, R^{b'} sont choisis indépendamment les uns des autres parmi l'atome d'hydrogène et le groupe méthyle, ou R^{a} et R^{b}, et/ou R^{a'} et R^{b'}, représentent ensemble chacun un atome d'oxygène ;
q vaut 0, 1 ou 2 selon la valence de M ;
X, Y peuvent être identiques ou différents et représentent chacun 0, S, NH ou une liaison chimique ; et
R^{1'}, R^{2'} peuvent être identiques ou différents et représentent chacun un groupe alkyle en C₁-C₆, cycloalkyle en C₃-C₆, aryle ou un radical Ar"-C(R^{a"},R^{b"}), où Ar' a les significations données pour Ar, et R^{a"}, R^{b"} ont les significations données pour R^{a}, R^{b}, ou R^{1'}, R^{2'}, avec X et Y, représentent un radical de formule A tel que défini ci-dessus.

12. Procédé selon l'une des revendications précédentes, dans lequel les monomères à polymériser, qui comprennent au moins un segment monomère A1 et au moins un segment monomère A2, comprennent au moins un monomère de formule générale V 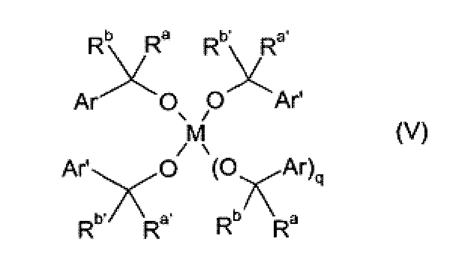 dans laquelle
M est un métal ou un métalloïde ;
Ar, Ar' sont identiques ou différents et représentent chacun un noyau aromatique ou hétéroaromatique qui comprend éventuellement 1 ou 2 substituants choisis parmi les groupes halogéno, CN, alkyle en C₁-C₆, alcoxy en C₁-C₆ et phényle ;
R^{a}, R^{b}, R^{a'}, R^{b'} sont choisis chacun indépendamment des autres parmi l'atome d'hydrogène et le groupe méthyle, et R^{a} et R^{b}, et/ou R^{a'} et R^{b'}, représentent ensemble chacun un atome d'oxygène ; et
q vaut 0, 1 ou 2, selon la valence de M.

13. Procédé selon la revendication précédente, dans lequel les monomères à polymériser, qui comprennent au moins un segment monomère A1 et au moins un segment monomère A2, comprennent un premier monomère M1 et au moins un deuxième monomère M2 qui se distingue au moins par le segment monomère A1 du monomère M1, le monomère M1 étant choisi parmi les monomères de formule V, et le ou les monomères supplémentaires M2 étant choisis parmi les monomères de formule V qui se distinguent par le métal (métalloïde) M du monomère M1.

14. Procédé selon l'une des revendications précédentes, dans lequel les monomères à polymériser, qui comprennent au moins un segment monomère A1 et au moins un segment monomère A2, comprennent un premier monomère M1 et au moins un deuxième monomère M2, qui se distingue par les segments monomères A1 et A2 du monomère M1, le monomère M1 étant choisi parmi les monomères de formule V, et le ou les monomères supplémentaires M2 étant choisis parmi les monomères de formule III tels que définis dans la revendication 12.

15. Procédé selon l'une des revendications précédentes, dans lequel les monomères à polymériser, qui comprennent au moins un segment monomère A1 et au moins un segment monomère A2, comprennent un premier monomère M1 et au moins un deuxième monomère M2 qui se distingue par au moins le segment monomère A1 du monomère M1, le monomère M1 étant choisi parmi les monomères de formule V, et le ou les monomères supplémentaires M2 étant choisis parmi les monomères de formule VI 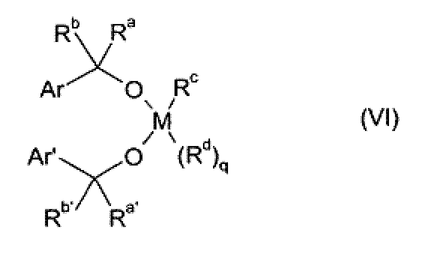 dans laquelle
M représente un métal ou un métalloïde ;
Ar, Ar' sont identiques ou différents et représentent chacun un noyau aromatique ou hétéroaromatique, qui comprend éventuellement 1 ou 2 substituants qui sont choisis parmi les groupes halogéno, CN, alkyle en C₁-C₆, alcoxy en C₁-C₆ et phényle ;
R^{a}, R^{b}, R^{a'}, R^{b'} sont choisis chacun indépendamment des autres parmi l'atome d'hydrogène et le groupe méthyle, ou R^{a} et R^{b}, et/ou R^{a'} et R^{b'}, représentent chacun ensemble un atome d'oxygène ;
q vaut 0, 1 ou 2, selon la valence de M ; et
R^{c}, R^{d} sont identiques ou différents et sont choisis parmi les groupes alkyle en C₁-C₆, cycloalkyle en C₃-C₆ et aryle.

16. Procédé selon l'une des revendications précédentes, dans lequel la polymérisation est amorcée par un amorceur I, qui est choisi dans le groupe consistant en les acides de Lewis et les acides de Brönsted.

17. Procédé selon l'une des revendications précédentes, comprenant
(b) la réaction des monomères M1 et en option M2, en présence de l'amorceur I et éventuellement du solvant (L), pour former un prépolymère ;
(d) application du mélange de l'étape (b) sur une surface ; et
(e) conversion du prépolymère en un film polymère.

18. Procédé selon la revendication précédente, comprenant
(a) la mise à disposition des monomères M1 et en option M2, d'un amorceur I et éventuellement d'un solvant (L), chacun tel que défini ci-dessus ;
(b) la réaction du monomère M1 et en option M2, en présence de l'amorceur I et éventuellement d'un solvant (L), pour former un prépolymère ;
(c) le mélange du prépolymère obtenu avec un solvant (L*) ;
(d) l'application du mélange de l'étape (d) sur une surface ; et
(e) la conversion du prépolymère en un film polymère.

19. Utilisation de films polymères non poreux pouvant être obtenus comme défini dans les revendications 1 à 18 pour la perméation, la séparation de gaz ou la pervaporation.
